Europäisches Patentamt

**European Patent Office**

**Office européen des brevets**

(19)

(11) Publication number: **0 268 490**
A2

# EUROPEAN PATENT APPLICATION

(12)

(21) Application number: **87310245.3**

(22) Date of filing: **19.11.87**

(51) Int. Cl.⁴: **B 25 J 9/18**

(30) Priority: **20.11.86 US 932975    20.11.86 US 932841**
**20.11.86 US 932974**

(43) Date of publication of application:
**25.05.88  Bulletin  88/21**

(84) Designated Contracting States: **DE FR GB IT SE**

(71) Applicant: **UNIMATION INC.**
**Shelter Rock Lane**
**Danbury Connecticut 06810  (US)**

(72) Inventor: **Daggett, Kenneth Edward**
**3724 Glen Eagle Drive**
**Murrysville, PA 15668  (US)**

**Casler, Richard James, Jr.**
**32 Maltbie Road**
**Newtown, CT 06470  (US)**

**Vercellotti, Leonard Charles**
**830 7th Street**
**Oakmont, PA 15139  (US)**

**Onaga, Eimei Ming**
**10 Ox Drive**
**Brookfield Center, CT 60805  (US)**

**Johnson, Richard Arthur**
**3502 McElroy Drive**
**Murrysville, PA 15668  (US)**

(74) Representative: **van Berlyn, Ronald Gilbert**
**23, Centre Heights**
**London, NW3 6JG  (GB)**

(54) **Digital robot control having improved arm joint motor control and feedback torque current sensing systems.**

(57) A digital control [Fig. 2] for a multiaxis robot [Fig. 1] includes a pulse width modulation (PWM) circuit [Fig. 5B] which drives the arm joint motors (21-26) through a motor control loop. Pulse width modulated control signals (A1, A2, B1, B2) operate power switches in a power bridge [Fig. 5 or Fig. 11B] to control the current to each robot joint motor. In addition, the PWM circuit provides time stabilized current sampling [Fig. 12] synchronized to the sampling frequency of position and velocity loops in the robot control. The PWM scheme enables accurate motor current measurement through usage of a single current sense resistor (59 or 63) independent of the number of legs in a power amplifier configuration. This scheme permits commercially available, low cost, power blocks to be used for implementation of robot control system power amplifiers. Moreover, the PWM circuitry may be adapted for controlling either a brush [Fig. 5] or brushless [Fig. 11A] type DC arm joint motor.

EP 0 268 490 A2

**Description**

DIGITAL ROBOT CONTROL HAVING IMPROVED ARM JOINT MOTOR CONTROL AND FEEDBACK TORQUE
CURRENT SENSING SYSTEMS

INTRODUCTION

The present invention relates to robots and more particularly to robot arm joint motor control and feedback torque current sensing systems.

The design of robot controls has been partly based on what has been learned from the design of numerical machine tool controls. In a typical machine tool control, a position control loop may be implemented in a microprocessor or other digital controller which generates an analog voltage representing a velocity setpoint for a power amplifier assembly. Servo control loops for velocity and torque are closed with analog circuitry located within the power amplifier assembly.

In more recent robot controls, both position and velocity control loops have been implemented in a microprocessor or other digital controller which generates a voltage output representing velocity error or current setpoint for the power amplifier assembly. Analog circuitry in the power amplifier closes the current loop for arm joint motor control.

Requirements placed on robot control systems differ significantly from those placed on numerical machine tool controls. The following are two basic differences:

1. Control loop parameters can typically be established to optimize control at the time of machine tool installation because time constants for the system are relatively constant for all operating conditions of the machine. Robot control parameters cannot be similarly fixed since robot time constants can vary significantly over the operating range of the robot arm due to large inertia changes caused by the manipulation of variable weight loads from fully collapsed to fully extended arm positions.

2. Machine tools typically require stiff accurate path control. Robot arms typically require dexterity which in turn is facilitated by control over the force applied by the robot arm to an object.

Power amplifiers are employed in robot arm control systems to supply the motor current needed to operate the axis drives and move the arm in accordance with a robot control program. Power amplifiers have been significant cost elements in the overall cost of robot control systems and it is thus important that power amplifiers be selected or designed to achieve quality performance with low cost.

Typically, power amplifier blocks have included internal circuitry that provides motor current control through on/off switching of switching devices within the power block. While this approach has been needed to coordinate power amplifiers with the position or position/velocity control loop configurations employed in controllers for numerical machine tools and robot arms, it has also made power amplifiers costly and has highly limited the external controllability of the internal power amplifier switching devices.

Nonetheless, the present and foreseeable volume of robot control systems does not justify the development of more suitable internally controlled power amplifier packages by any single manufacturer. To achieve desired performance in the field of robot control, it is thus necessary to look to the use of less costly commercially available power devices.

Hybrid power devices or blocks have recently been developed as low cost devices for high-volume nonservoed applications. The hybrid power blocks include power semiconductor and clamp diodes in multiple legs of a power amplifier bridge in a single package suitable for direct mounting on a heat sink. No control circuitry is included in the hybrid power block, and the blocks thus are characterized with control flexibility as well as low cost.

Power amplifiers for high power robotic drives typically employ pulse width modulation control schemes. The power switch elements are usually configured in an H bridge where brush type DC joint motors are used.

Normally, current sensing could be accomplished through insertion of a current sense resistor in series with each leg of the power amplifier bridge. The voltages across the sense resistors would provide a measure of the axis motor current. However, insertion of a series resistor in each bridge leg is not feasible since the noted commercially available hybrid power blocks only have external leads which operate as common voltage and return of power supply rail leads. Moreover, analysis indicates that, even if such a leg resistor arrangement is employed with the low cost hybrid power block, circulating currents can flow through the motor without flowing through the power supply leads thereby making the accuracy of sensed current values uncertain.

THE OBJECTS

One object of the present invention is to achieve better robot performance and more economic robot control manufacture with the use of a digital robot arm joint motor control system including digital pulse width modulation (PWM) circuitry to control the on time for drive current supplied to the robot arm joint motors.

Another object of the present invention is to employ a PWM scheme to enable a digital implementation of the torque current loop outside a motor drive power amplifier block to (1) apply digital PWM signals directly to the power amplifier block to control directly switch conduction times, and (2) to stabilize in time the motor current feedback signals by sampling it synchronously with the sampling frequency of the position and velocity loops.

A still further object of the present invention is to provide a digital PWM scheme to control brushless as well as brush type arm joint DC motors.

A still further object of the present invention is directed to an arm joint motor sensing system which provides for sensing motor current while making use of low cost hybrid power amplifier blocks for a digital robot controller.

## STATEMENT OF THE INVENTION

With this object(s) in view the present invention resides in a robot and a system for energizing an arm joint motor thereof and for sensing motor current for feedback control thereof comprising a power amplifier, current sensing means, and digital control means. The power amplifier includes a circuit with a plurality of legs each having one end thereof connected to supply drive current to the motor from a power supply connected across the circuit to the other ends of the legs. A semiconductor switch having a control terminal is connected in each leg of the circuit to make that leg conductive when a control signal is applied to the switch control terminal. The robot and associated system are characterized by a current sensing means serially connected between the circuit and the power supply for generating a signal representative of the arm joint motor current. In addition, the digital control means cyclically generates switch control signals that are pulse width modulated to operate the power switches of the circuit and produce motor drive current having direction and magnitude required by cyclically robot drive control commands. The digital control means generates the switch control signals to make each motor supply path through the circuit conductive over at least a short period of each control cycle. Further included is a means for cyclically sampling the current signal of the current sensing means at a predetermined time during conduction and each motor supply path in synchronism with the control means cycle and within the short cycle portion. The sampling means couples signals representing the current signal samples to the digital control means to provide feedback control over the generation of the robot drive control commands.

The system is capable of energizing either brush type or brushless type dc motors. In the brush type case, the power amplifier circuit may be an H type bridge having four legs with a cross path in which the motor is disposed. One of the switches is disposed in each bridge leg with an upper leg and the opposite lower leg forming a forward path to drive the motor in the forward direction and with the other opposite upper and lower legs forming a reversal path to drive the motor in the reverse direction. One of the switches at each motor path has a control signal applied thereto to control the drive current conduction time, and the other of said switches in each motor path has a control signal applied thereto to make it not conductive when the one drive current controlling switch on its side of the H bridge is conductive and during underlap time and to make it conductive for the rest of the time in each cycle so as to provide paths for free wheeling motor currents.

In the brushless type motor case, the power amplifier may include a first set of switches for energizing the motor winding in the forward direction and a second set of switches for energizing the motor winding in the reverse direction. The digital control means includes a digital pulse width modulator circuit having an up/down counter for generating a count as a function of time. The modulator circuit further includes means for comparing the counter means count to a signal representing a control command so as to define the time width of at least a first output control pulse for operating the first set of switches and the time width of at least a second output control pulse for operating the second set of switches according to the control command magnitude and a command polarity, and means for generating respective signals for operating the first and second sets of switches to force current to be conducted through the motor winding in each direction for a short period of time in each cycle of said counter.

## BRIEF DESCRIPTION OF THE DRAWINGS

The invention will become more readily apparent from the following description of the preferred embodiment(s) thereof shown, by way of example only, in the accompanying drawings, wherein:

Figure 1 shows a perspective view of a robot which is operated with more advanced and more accurate performance when controlled by a system making use of the invention;

Figure 2A shows a generalized block diagram of a control loop arrangement employing position, velocity and torque control loops in which the invention may be embodied;

Figure 2B shows a more detailed block diagram of a control loop arrangement employing position, velocity and torque control loops in which the invention preferably is embodied;

Figure 3A shows an overview of an arrangement of an arm interface (AIF) board and other electronic boards on which digital robot control circuitry is provided to implement the present invention;

Figure 3B shows a block diagram of a pulse width modulator (PWM) which produces control signals for a power amplifier operated in accordance with the principles of the invention;

Figure 4 shows a graph which shows control signals generated by the PWM for the power amplifier;

Figure 5 shows a hybrid type, H bridge power amplifier arranged in accordance with the invention to operate DC brush type motors and sense robot joint motor current for feedback control;

Figure 5B shows a more detailed block diagram of the PWM generator depicted in Figure 3B;

Figures 6A and 6B show circuitry employed on the arm interface board to couple joint motor voltage commands to the PWM generator which is formed by a pair of LSI chips;

Figure 6C shows a register map for the PWM circuitry;

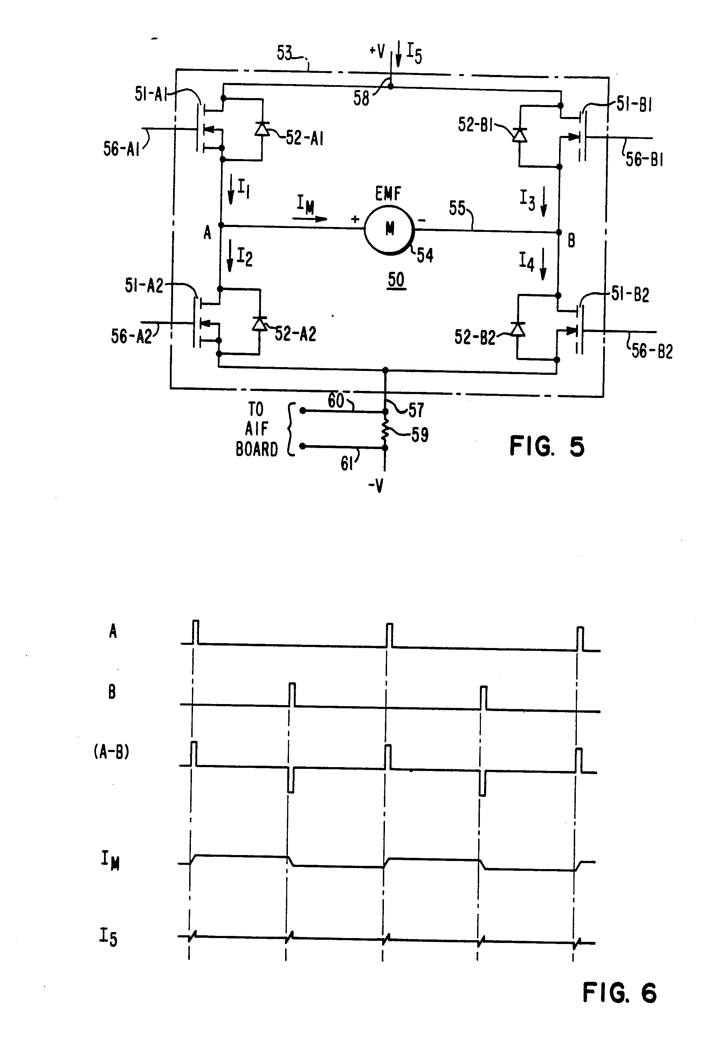

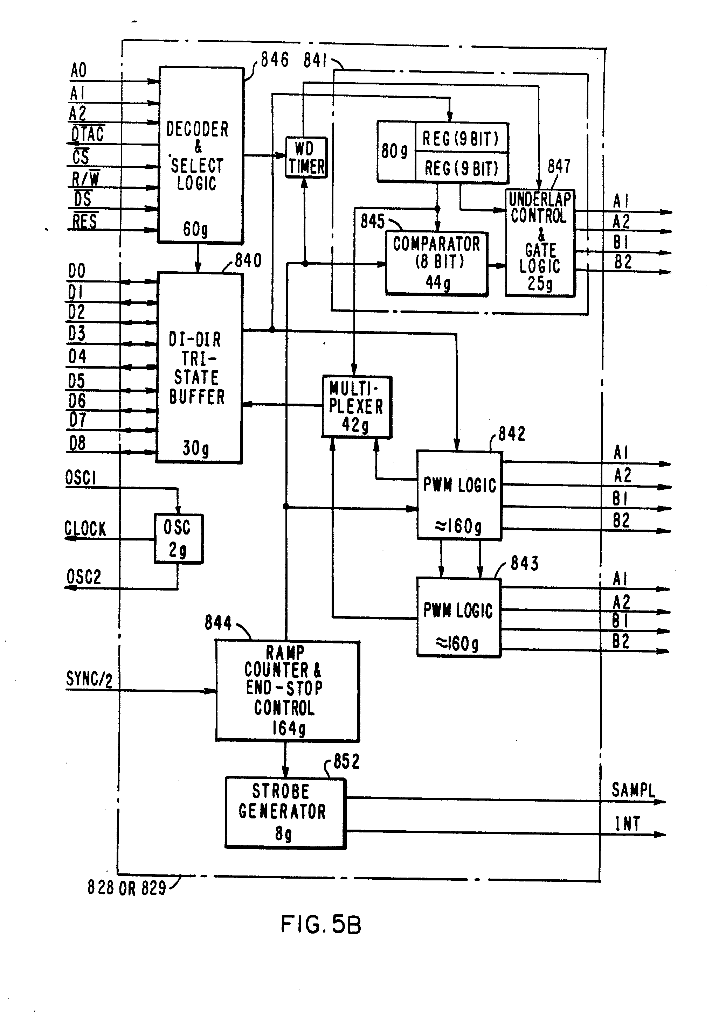

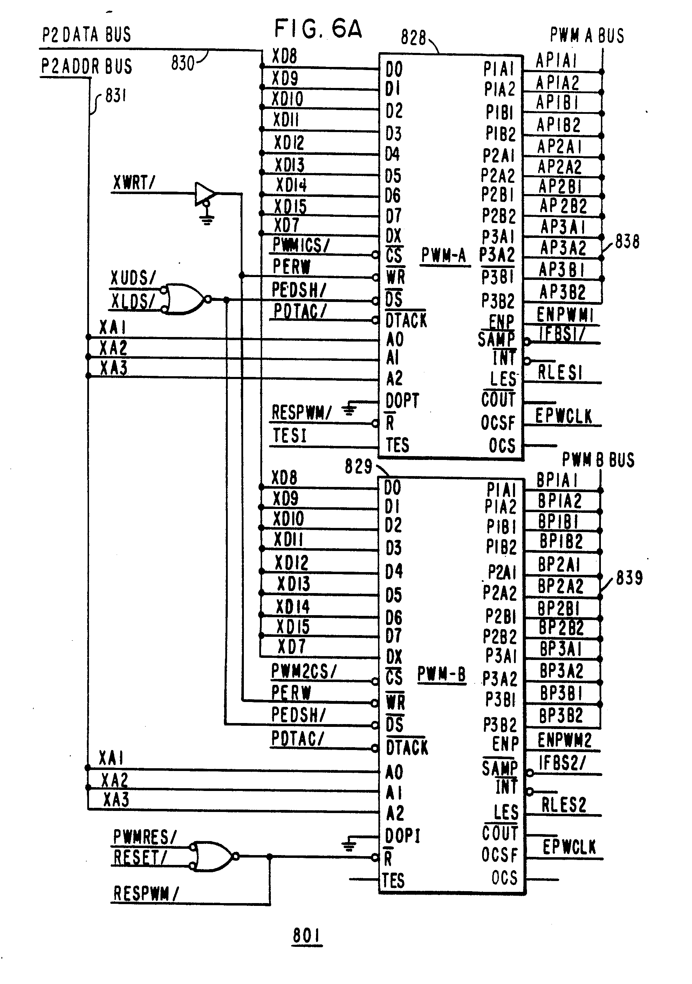

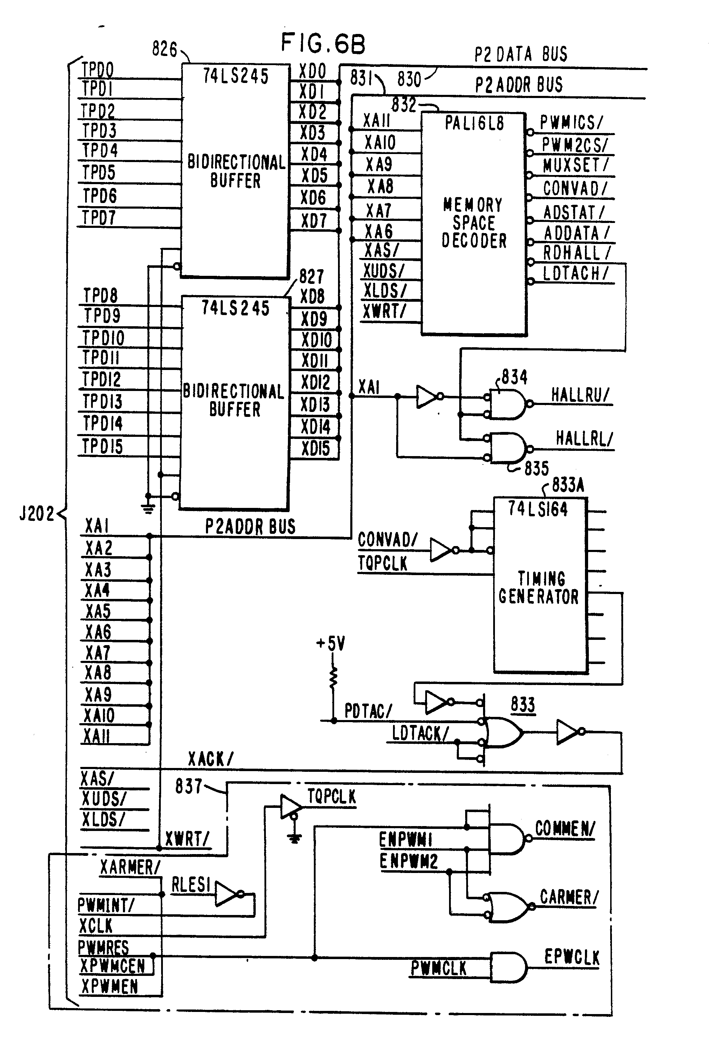

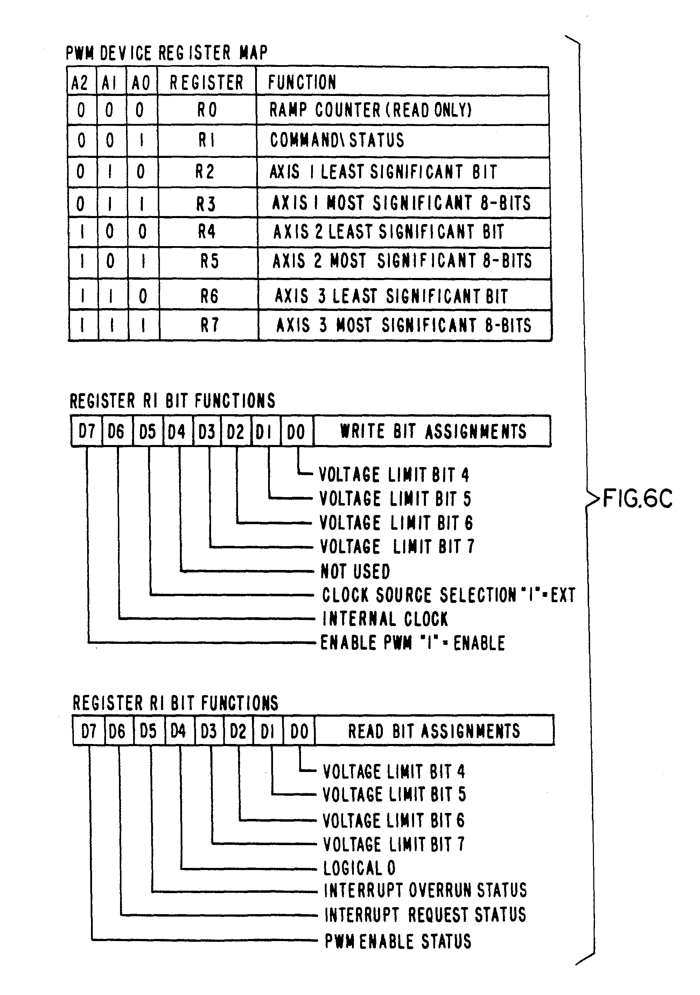

Figures 6-10 show respective sets of current and voltage waveforms for the bridge circuit of Figure 5 in various operating cases;

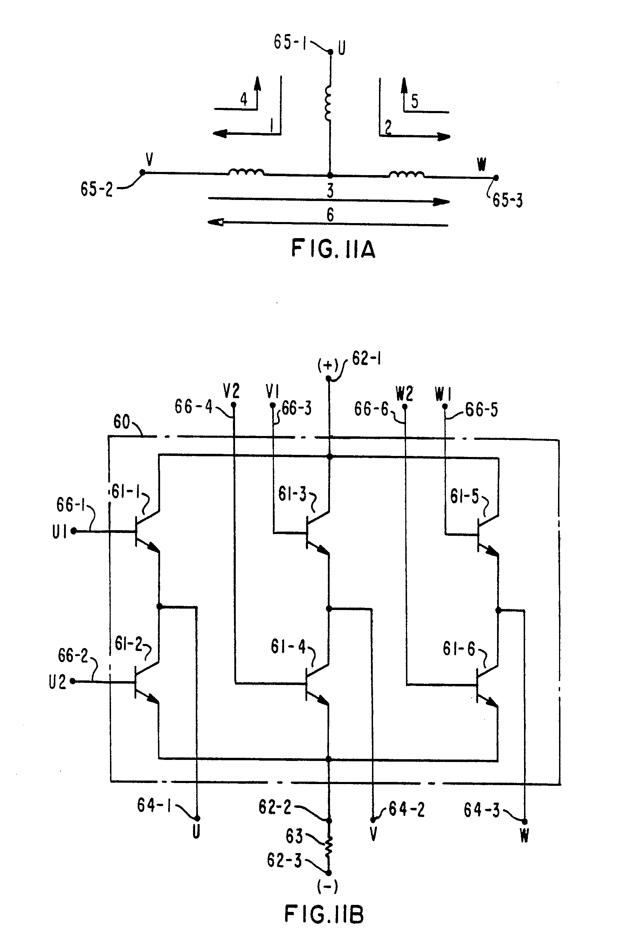

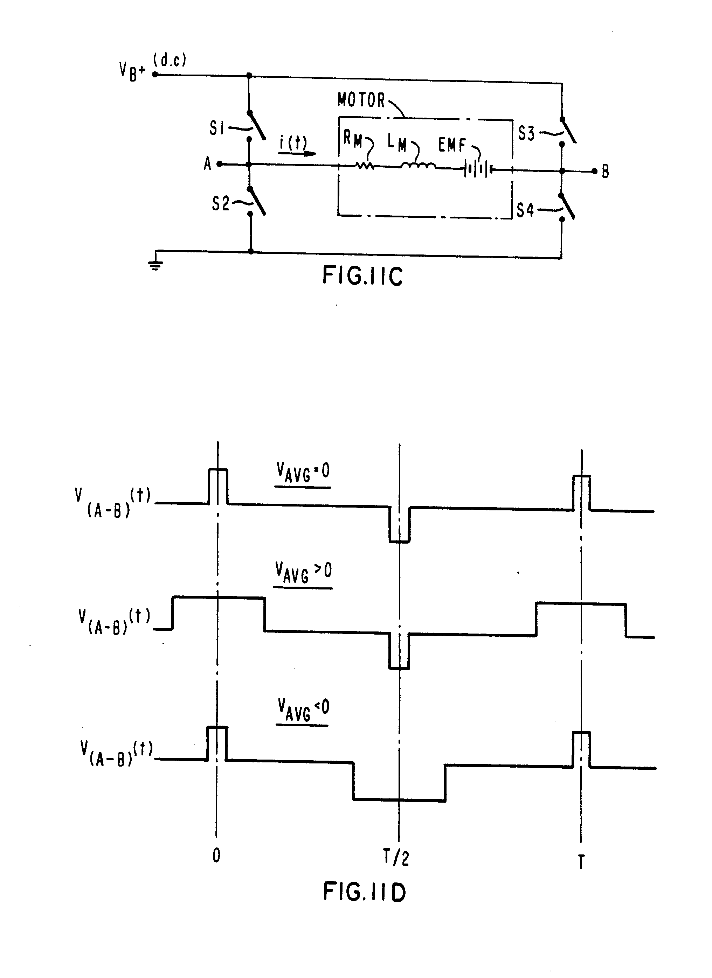

Figure 11A shows a circuit diagram for another embodiment in which the power amplifier has a three phase configuration for use in operating brushless DC motors;

Figure 11B shows a waveform diagram for Figure 11A;

Figures 11C and 11D provide illustrations employed in proving the sampled motor current equals average motor current;

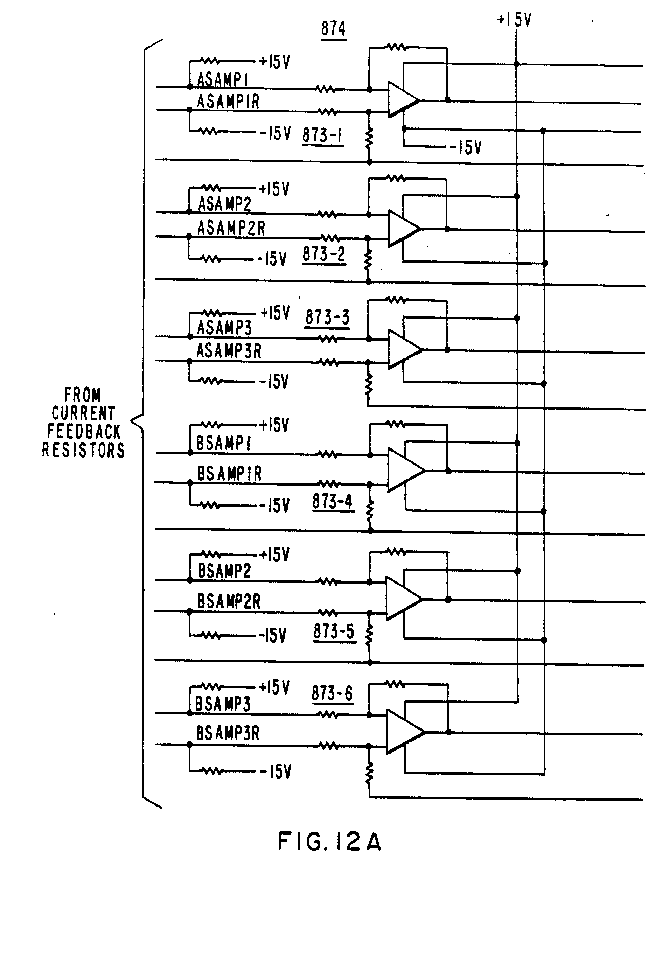

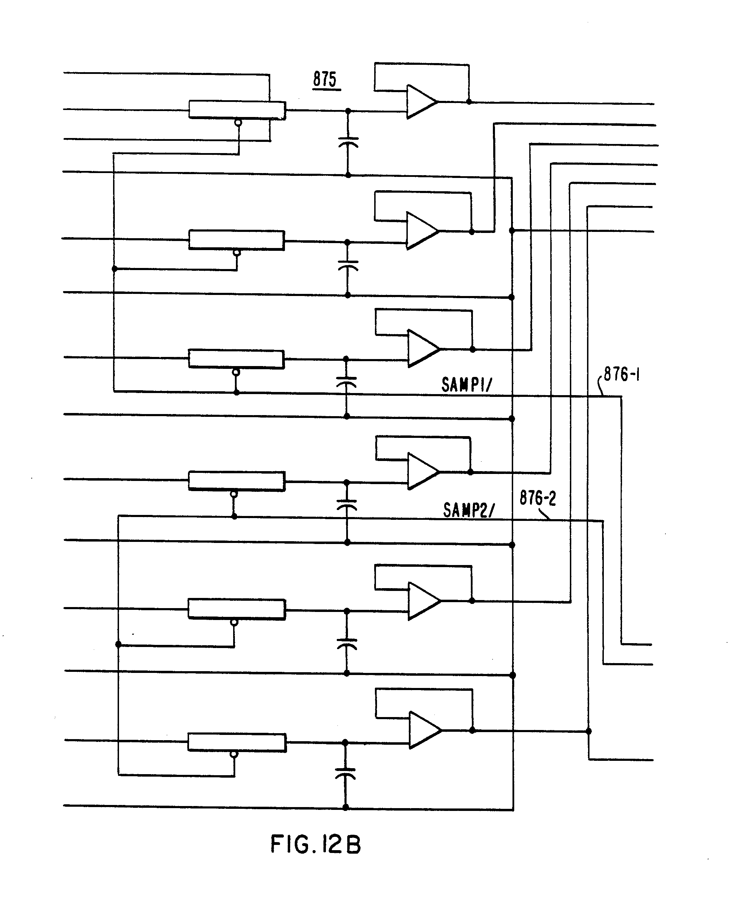

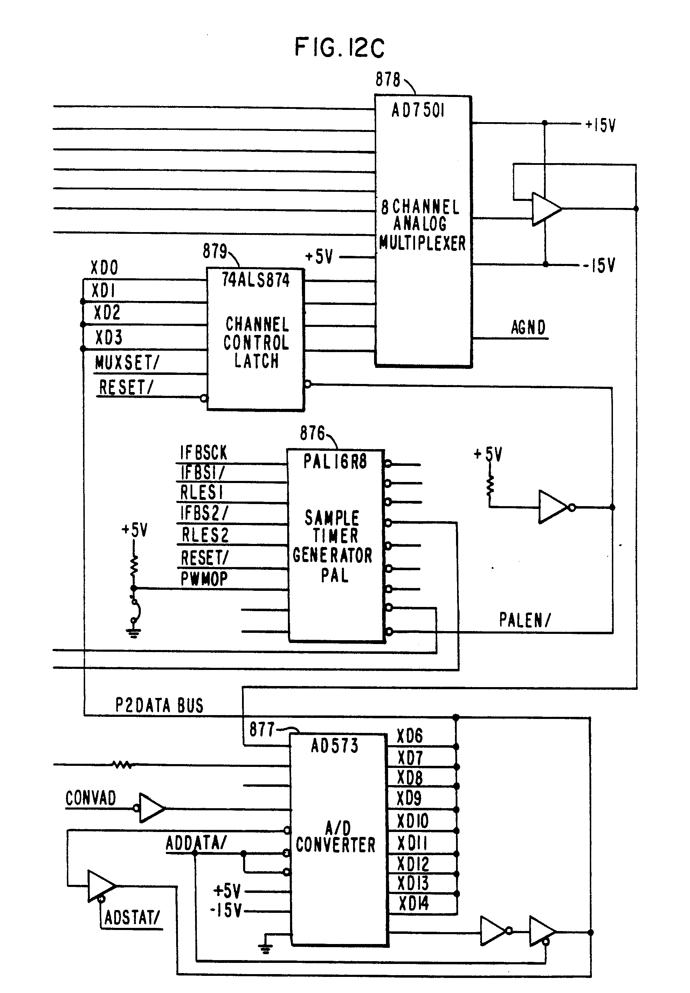

Figures 12A-12C show circuitry employed on an arm interface board for processing feedback current signals;

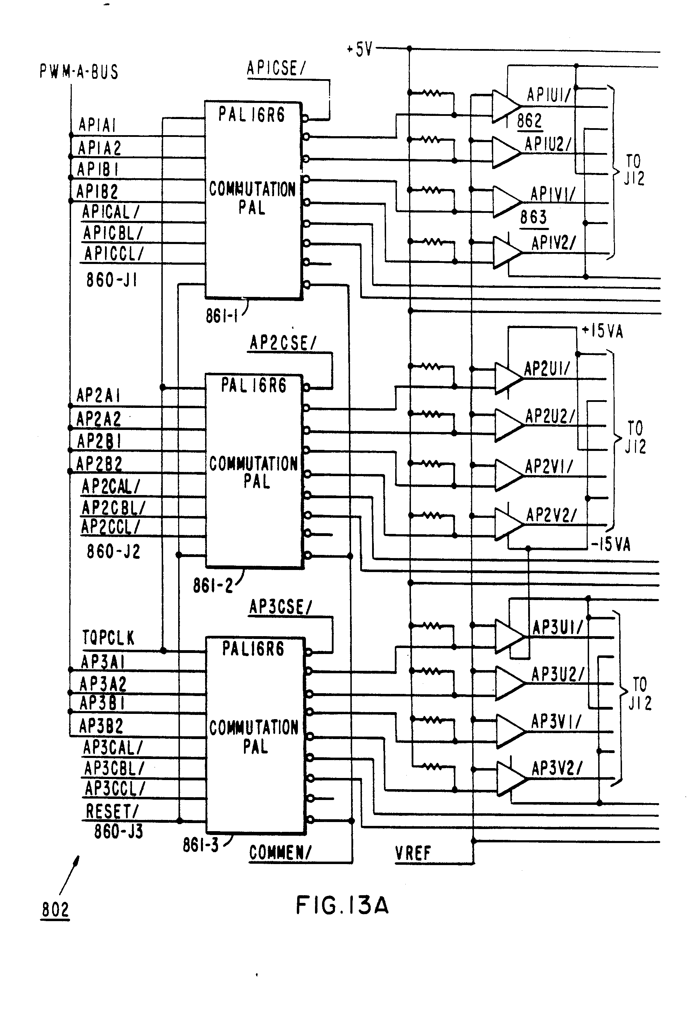

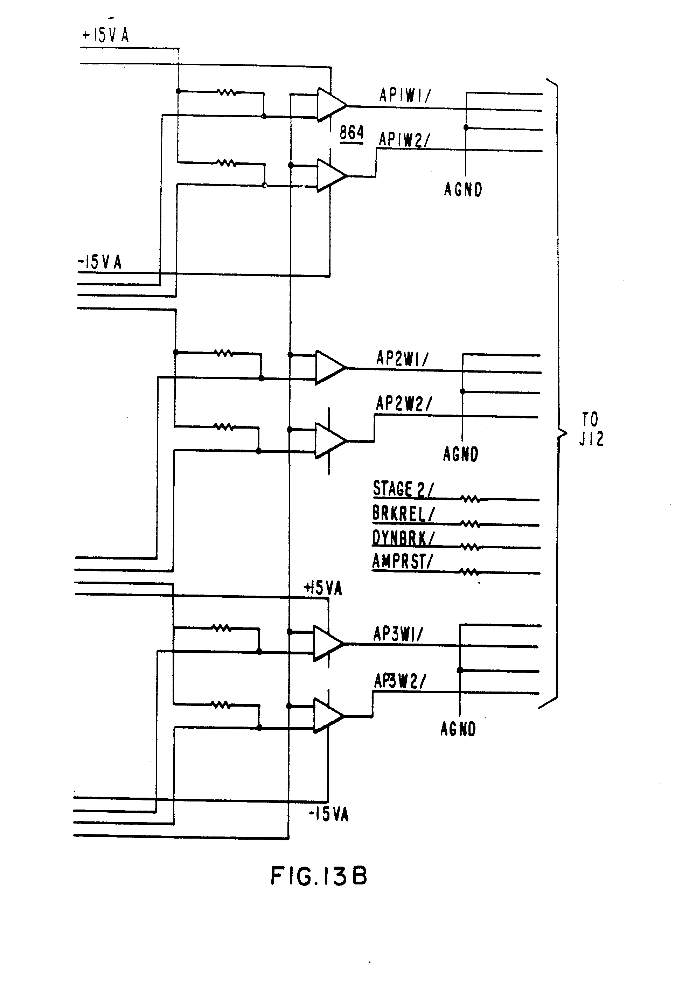

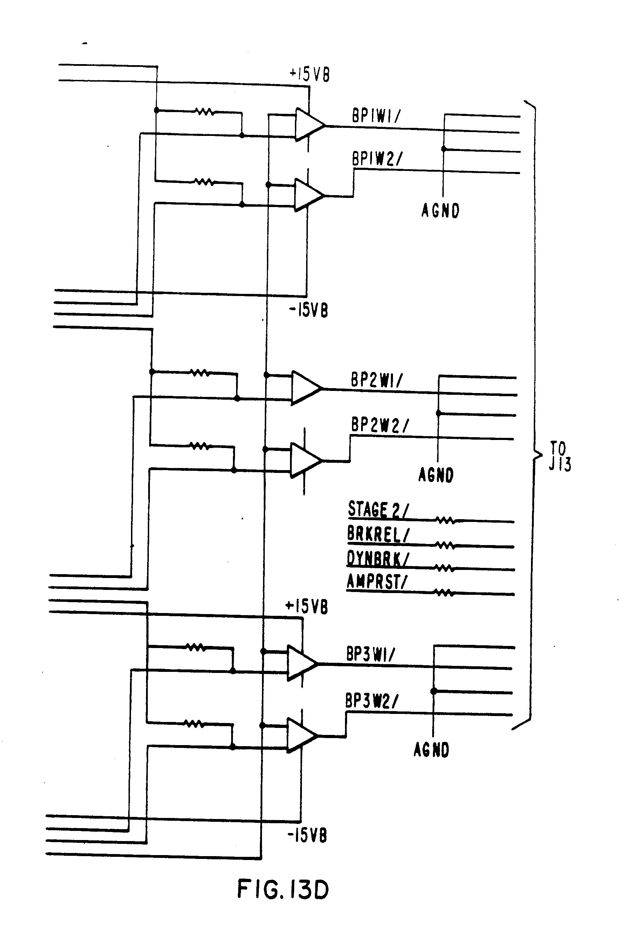

Figures 13A-F illustrate commutation circuit operation in a brushless DC motor embodiment of the invention;

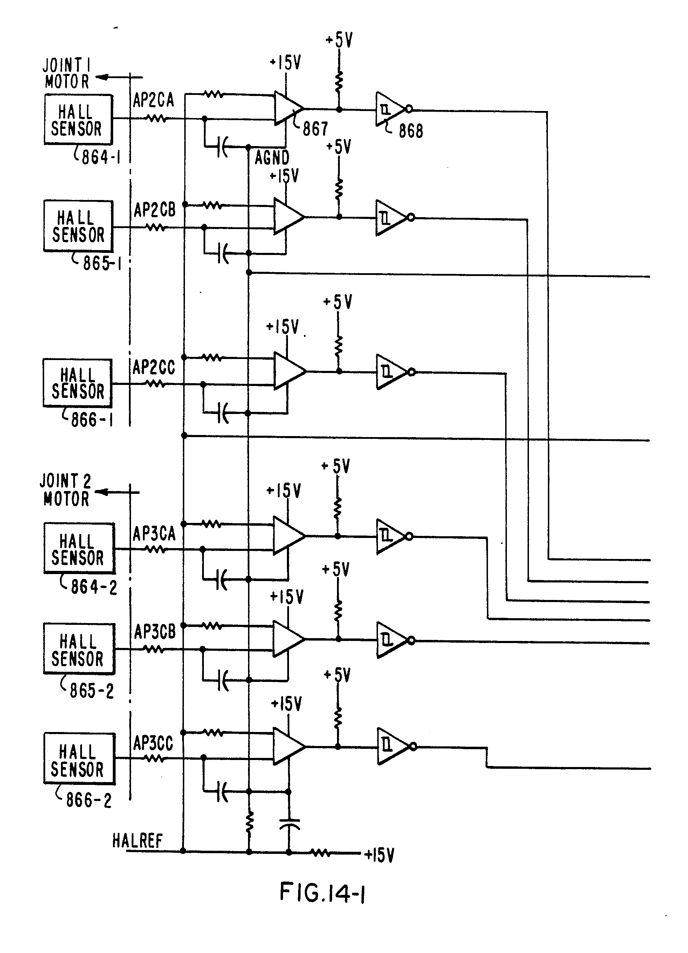

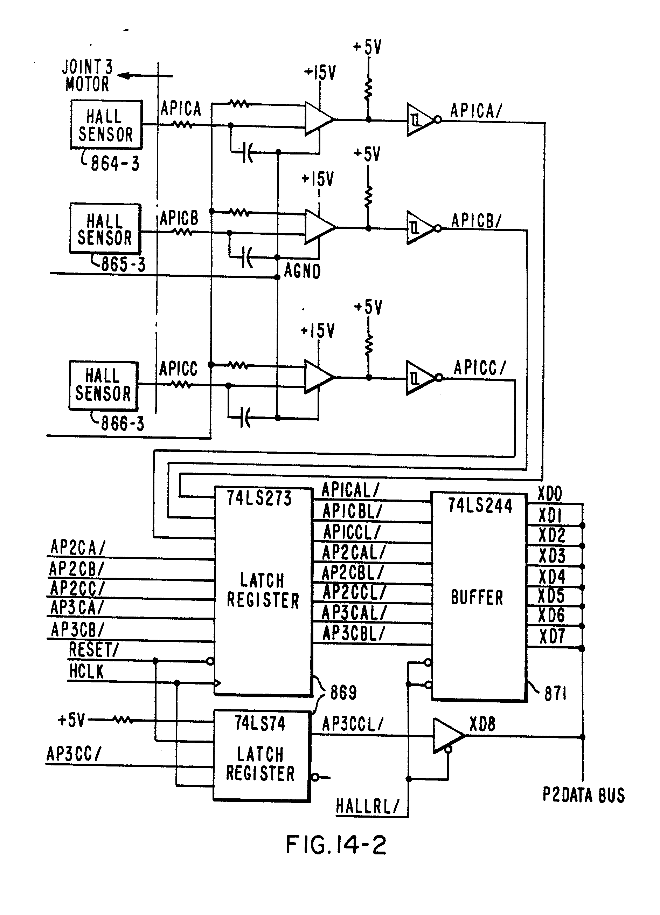

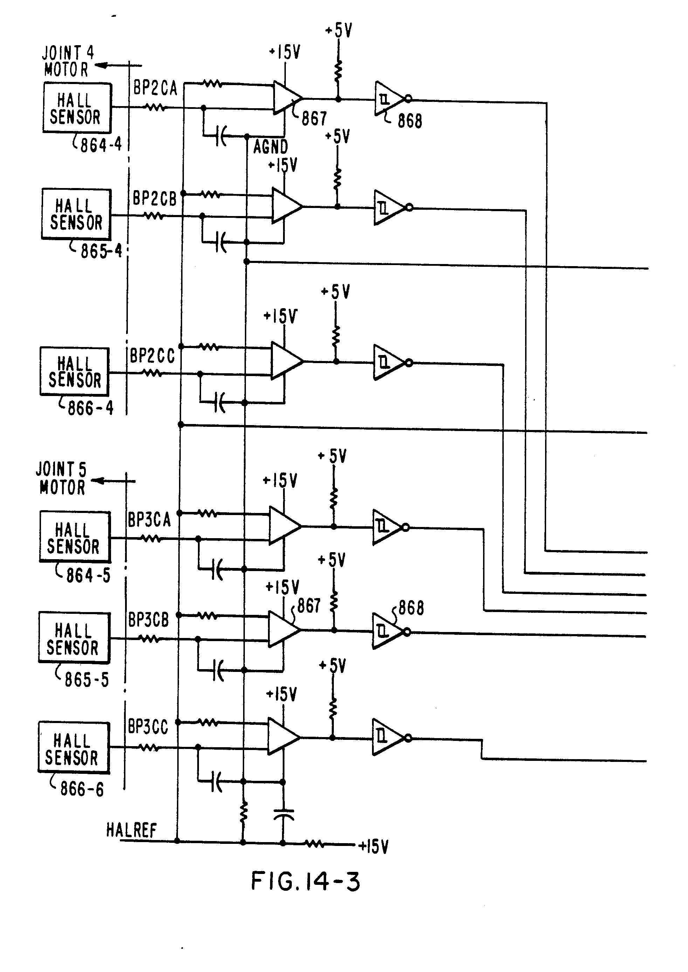

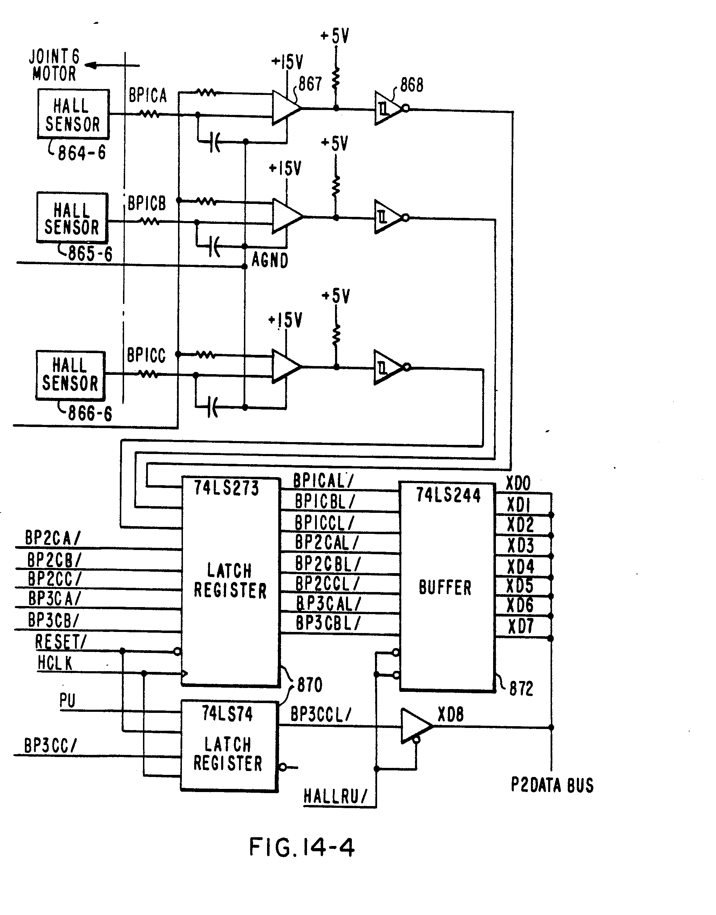

Figures 14-1 through 14-4 show circuitry employed for processing signals from hall sensors which are disposed about the arm joint motors of the robot; and

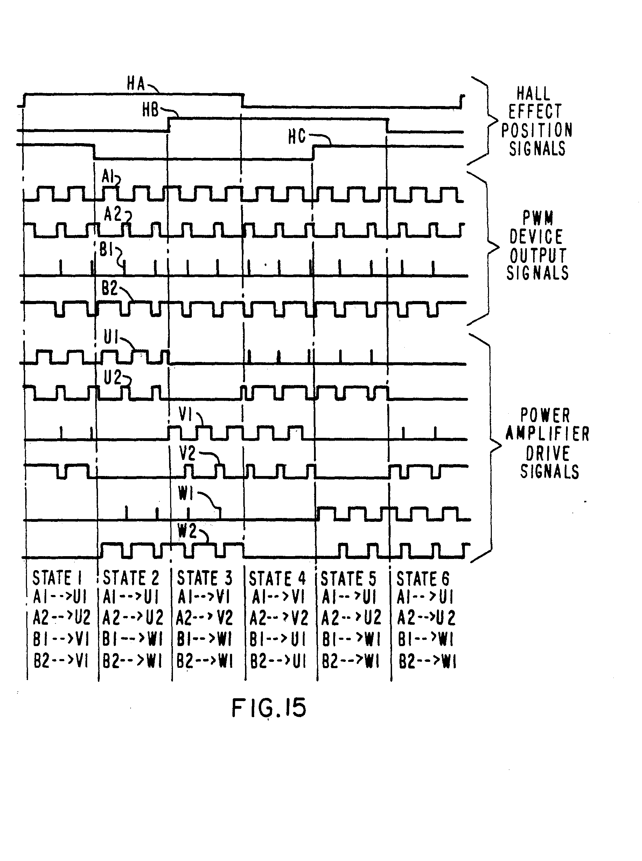

Figure 15 depicts waveforms of the hall sensors in conjunction with the PWM and power amplifier drive signal waveforms.

## DESCRIPTION OF THE PREFERRED EMBODIMENT ROBOTS - GENERALLY

Robot capabilities generally range from simple repetitive point-to-point motions to complex motions that are computer controlled and sequenced as part of an integrated manufacturing system. In factory applications, robots can perform a wide variety of tasks in various manufacturing applications including: die casting, spot welding, arc welding, investment casting, forging, press working, spray painting, plastic molding, machine tool loading, heat treatment, metal deburring, palletizing, brick manufacturing, glass manufacturing, etc. For more complete consideration of robots and their uses, reference is made to a book entitled "Robotics In Practice" published in 1980 by Joseph F. Engelberger.

To perform work within its sphere of influence, a robot typically is provided with an arm, a wrist subassembly and an end effector. The coordinate system employed for the robot arm typically is Cartesian, cylindrical, polar or revolute. Generally, three motion axes are employed to deliver the wrist subassembly anywhere within the sphere of influence and three additional motion axes are employed for universal orientation of the end effector. A drive system is used for each motion axis, and it may be electrical, hydraulic or pneumatic.

## PUMA ROBOT

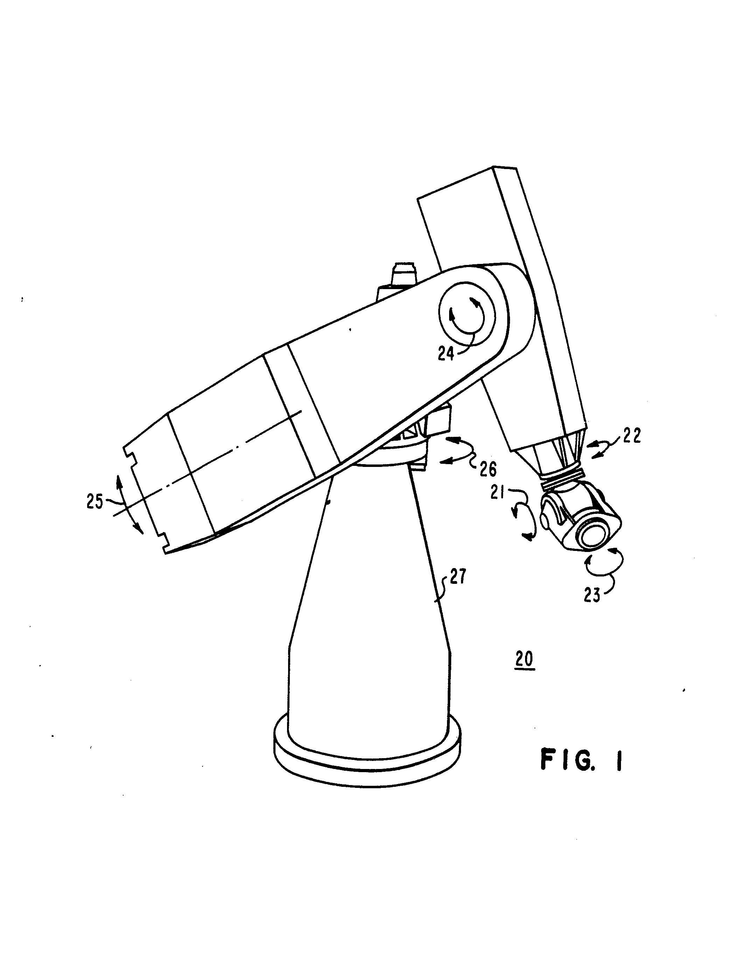

More particularly, there is shown in Figure 1 a six-axis industrial electric robot 20 which is illustrative of a wide variety of robots that can be operated in accordance with the principles of the invention. The robot 20 is a relatively powerful electric robot sold by Unimation Company, a wholly owned subsidary of the present assignee, under the trade name UNIMATE PUMA SERIES 700. The Model 761 PUMA has a 22 pound payload capacity and a reach of 59.1 inches. The Model 762 PUMA has a 44 pound payload capacity and a reach of 49.2 inches.

PUMA 700 Series robots are designed with flexibility and durability to ensure long life and optimum performance in even the harshest, most demanding manufacturing environments. Specific customer needs for either higher payload or extended reach determine which model is suitable for a particular task.

With its longer reach, the PUMA 761 is ideally suited for precise, repetitive tasks such as arc welding and sealant dispensing. The PUMA 762 performs high-precision material handling, machine loading, inspection, testing, joining and assembly in medium and heavier weight applications. The PUMA robots occupy minimal floor space, yet a large work envelope allows the robot to service multiple machines and work surfaces.

Each axis motion may be generated by a brush or brushless type DC electric motor, with axis position feedback generated by incremental encoders. As shown, the robot wrist is provided with three articulations, i.e., an up/down rotation indicated by arrow 21, a left/right rotation indicated by arrow 22 and a third motion indicated by arrow 23. Elbow and shoulder rotations in the up/down direction are respectively indicated by arrows 24 and 25. Finally, a left/right arm rotation on a base 27 is indicated by arrow 26.

## ROBOT CONTROL

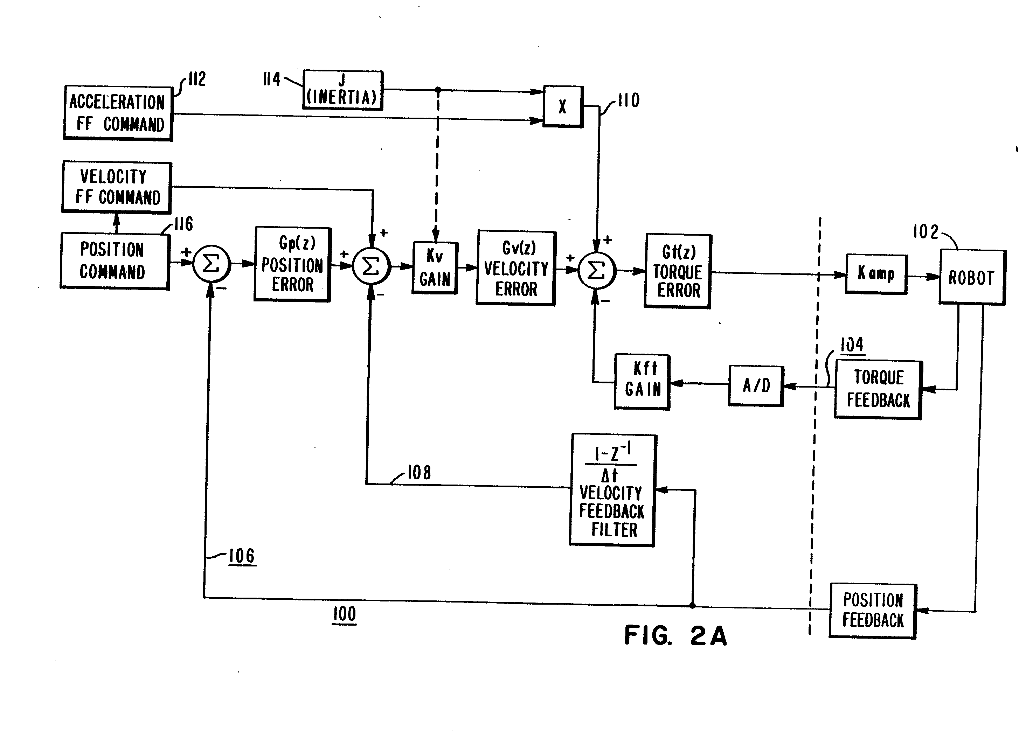

The present invention is directed to a robot control 30 (Figures 2A-2B) which can operate the robot 20 of Figure 1 and other Unimation robots including the larger 860 robot which employs brushless DC axis motors and absolute position feedback. Generally, however, the robot control 30 is universally and flexibly applicable to differing kinds and sizes of robots in stand alone or robotic network operation. The robot control 30 is identified by the acronym UNIVAL® and operates with completely digital servo control to provide better robot performance with lower cost.

As a result of its universality, the robot control 30 can be arranged to operate a complete family of robots. Thus, all hydraulically and electrically driven robot arms manufactured by Unimation, a company of Westinghouse, assignee of the present invention, can be operated by the robot control 30. The key to the family usage, or more generally the universality of UNIVAL® lies in modularization and in minimizing the use of arm dependent hardware and avoiding the use of any arm dependent hardware in as much of the modular control structure as possible.

## CONTROL LOOPS

In Figure 2A, there is shown an embodiment of a generalized control loop configuration 100 employable in the robot control. Thus, each robot arm joint motor 102 is operated by a torque control loop 104. An outer position control loop 106 is tandem connected to a velocity control loop 108 which in turn drives the torque control loop 104. A feedforward acceleration control loop 110 is responsive to acceleration command 112 and arm and load inertia 114 is also directly coupled to the input of the torque control loop 104. The robot arm is operated by the control loop 100 in accordance with a robot program through a stream of program position commands 116 applied to the position control loop.

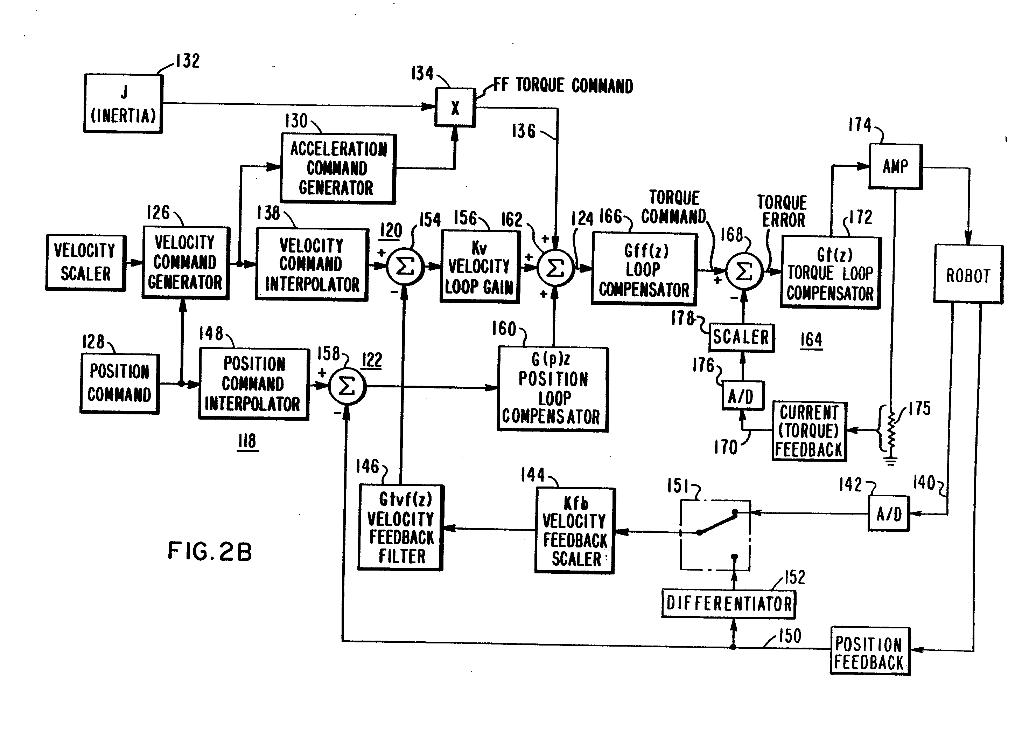

Figure 2B shows the preferred generalized control loop configuration 118 presently employed in the robot control. It is preferably implemented as a completely digital control. With the provision of hierarchical architecture and multiprocessor architecture and floating point hardware as described herein or in other patent applications referenced above, the trajectory cycle can be characterized with a cycle time in the range of 32 to 8 milliseconds depending on the employed modular configuration.

In the preferred control loop arrangement 118, position and velocity control loops 120 and 122 are parallel fed to the input of a torque control loop 124. Velocity commands are generated by block 126 from position commands received by block 128. In turn, feedforward acceleration commands are generated by block 130 from the velocity commands. Computed inertia (load and arm) 132 is multiplied against the acceleration command as indicated by reference character 134 in the feedforward acceleration control loop 136.

In the velocity loop 120, the velocity command in the present embodiment is generated once every 8 to 32 milliseconds depending on the modular configuration of the robot control. The basic robot control described subsequently herein has a trajectory cycle time of 32 milliseconds while the enhanced contact has a trajectory cycle of 8 milliseconds.

In any case, a velocity command generator 138 interpolates velocity commands at the rate of 1 each millisecond which corresponds with the velocity feedback sampling rate in velocity feedback path 140. As shown, velocity feedback for a Unimation 860 robot is produced by tachometer signals which are converted from analog to digital by converter 142. A scaler 144 and a filter 146 round out the velocity feedback circuitry.

Similarly, in the position control loop 122, an interpolator 148 generates position commands every millisecond in correspondence with the position feedback sampling rate in feedback path 150. In the Unimation 860 robot control, position feedback is absolute and the velocity and position feedback paths 140 and 150 operate as just described (with switch 151 as shown). For Unimation PUMA robots, tachometers are not available and velocity feedback is computed from incremental position feedback as indicated by block 152 (with the switch 151 swinging to its other position).

Velocity error is generated by summer 154 with gain applied by loop 156. Similarly, position error is generated by summer 158 with gain applied by box 160.

Velocity and position errors and feedforward acceleration command are summed in summer 162. Gain is applied to box 166 to generate a torque command which is applied to the input of torque control loop 164 every millisecond. Torque error is generated in summer 168 by summing the torque command (motor current command) with current feedback from feedback path 170. Box 172 applies a torque loop gain to the torque error and output commands (motor voltage commands) are applied to a power amplifier 174 which supplies the motor drive current for robot joint operation. Current feedback from resistor 175 is generated every 250 microseconds and converted to digital signals by box 176 with scaling applied by box 178.

## BOARD OVERVIEW

Implementation of the control looping for the robot control 30 is achieved by the use of digital control circuitry disposed on a plurality of electronic boards. The organization of the circuitry on the boards and the partitioning of programming among various microprocessors enables advanced robot control performance to be achieved with a modular control configuration characterized with economy of manufacture, facility and universality of use, and flexibility in choice of level of control performance.

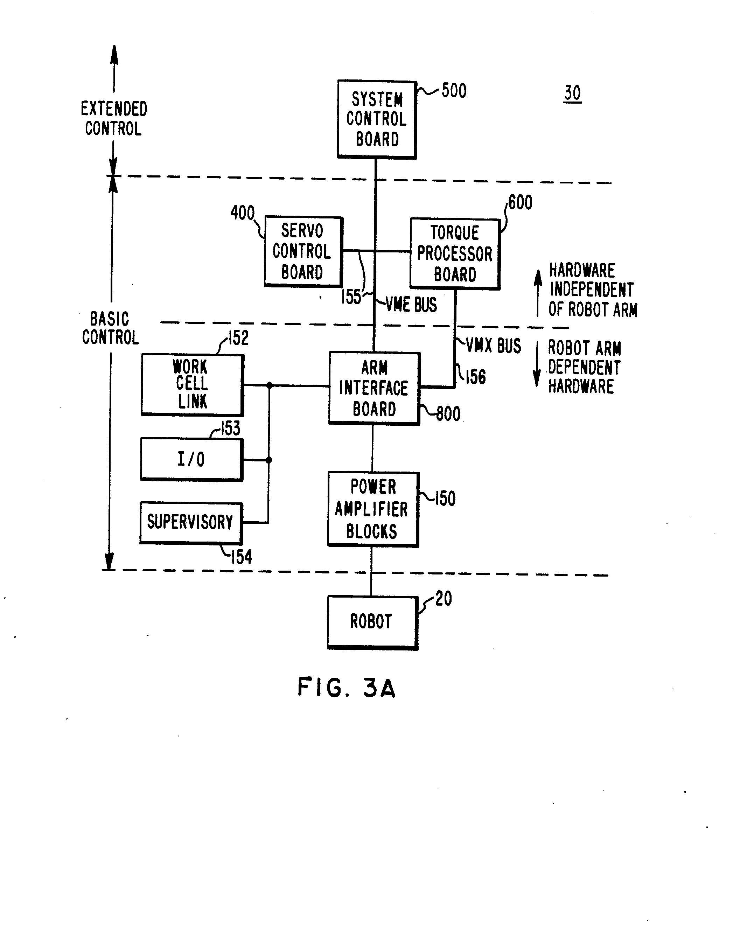

As shown in Figure 3A, the control board configuration includes an arm interface board 800 which preferably houses all circuitry dependent on the type of robot arm being controlled. For example, position feedback circuitry will differ according to whether absolute or incremental position feedback is used by the robot arm to be controlled. Thus, two or possibly more varieties of the arm interface board 800 can be employed to provide digital control systems for any of a variety of different sizes or types of robot arms. Any particular robot arm would require use of the arm interface board which is structured to work with that robot arm.

The arm interface (AIF) board 800 also houses generic circuitry such as VME bus control circuitry which is generally related to two or more boards and not to any one board in particular.

Control signals (pulse width modulated) are generated from the AIF board 800 to control power blocks 150 which supply motor currents to the robot joint motors at 20. The AIF board 800 also operates as a channel for external coupling of the robot control 30 to other robot controls in a work cell as indicated by the reference character 152, to programmable controllers and other input/output devices 153 in an area network and to higher level computers 154 for supervisory control.

A torque processor (TP) board 600 and a servo control board 400 are generic circuit boards used with the AIF board 800 and power amplifier blocks 150 in all robot control systems for all robot types. The three circuit boards 400, 600 and 800 provide complete 6 axis control for a robot arm and thus form a basic control configuration for the UNIVAL family of robot controls.

The torque processor board 600 provides motor torque control in response to commands from the servo control board 400. In turn, the servo control board 400 provides arm solutions and position and velocity control in accordance with a robot control program.

Extended control capability and/or system functioning is achieved by interconnecting additional electronic boards or devices to the basic control 400, 600, 800. For example, with the addition of a system control board 500 and partitioning of predetermined program functions including the arm solutions from the servo control board 400 to the system control board 500, the robot control can operate the robot 20 with significantly faster control action, i.e., with a trajectory cycle shortened from thirty-two microseconds to eight microseconds.

Interboard data communications for control and other purposes occur over multiple signal paths in a VME bus 155. Additionally, a VMX bus 156 is provided for connection between the torque processor board 600 and the AIF board 800.

Multiple pin interconnectors (not shown in Figure 3A) are provided on the AIF, TP and SCM boards and any other connectable units to facilitate VME and VMX interboard bus connections modular and board assembly for the robot control 30. Other connectors are provided on the AIF board 800 for external input/output connections.

More detail on the board circuit structure is presented herein.

## ARM DRIVE CONTROL

As previously described, the higher level control looping generates voltage command signals to be executed through the AIF board 800 for the arm axes so that the arm effector is moved to commanded positions under controlled velocity, acceleration and torque in accordance with a user's robot program. Pulse width modulation circuitry 801 and drive circuitry 802 are provided on the AIF board 800 to develop axis drive signals, in this instance for application to power amplifiers which provide the drive currents to DC brushless electric motors respectively associated with the six axes of arm motion. With the employment of width modulated digital control signals, the solid state switches that control the motor currents within the power amplifiers can be operated much more efficiently to control motor current levels through pulsating on/off control as opposed to continuous amplitude control.

## PULSE WIDTH MODULATION SCHEME GENERAL OVERVIEW

The pulse width modulation circuitry provides a digital interface for closing the torque or current control loop through the axis motor drive circuitry. The pulse width modulation concept is applied to control the conduction time width for the joint motor power switches and thereby satisfy motor voltage and torque and other higher level commands.

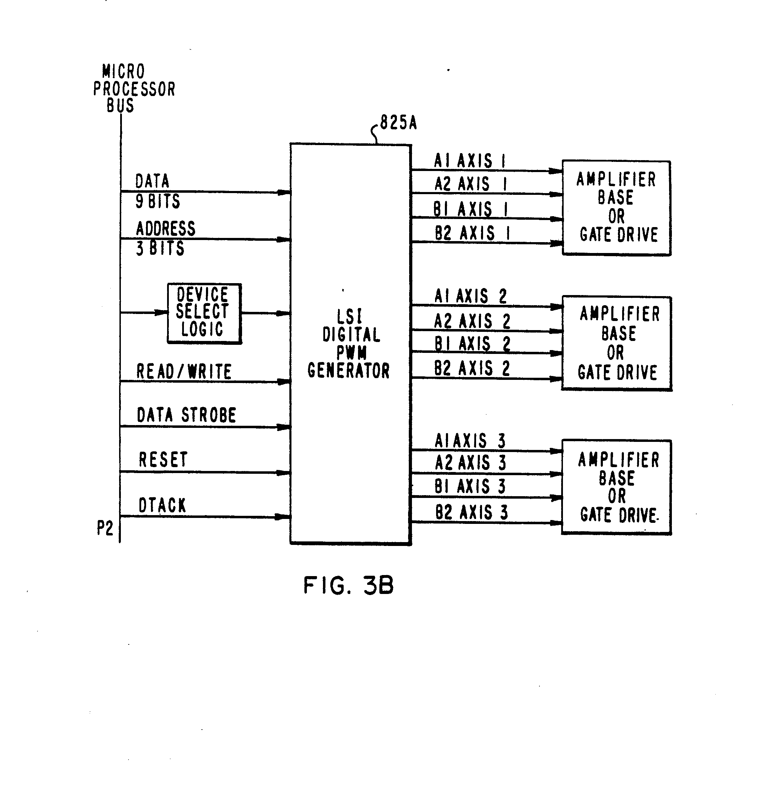

As shown in the generalized block diagram of Figure 3B, a digital PWM generator 825A receives 9 bit data commands and 3 register address bits from the torque microprocessor P2 bus. Additionally, device select logic, read/write, reset (initialization) and data strobe signals are received from the P2 bus. A DTACK (acknowledge) signal is returned to the bus by the PWM generator 825A after each reception from the torque calculator on the torque processor board 600 (see Figure 3A).

The digital PWM generator 825A is preferably arranged to service three axes where, for example, either brushless or brush type DC motors are employed as the axis drives. Thus, a set of digital PWM Control signals (in this instance four such signals A1, A2, B1, B2) is generated and applied to an amplifier base or gate drive circuitry associated with each axis motor whether the motor is the brushless type or the DC brush type for controlling the direction and magnitude of current flow through the motor windings through on/off power switch control. In other invention embodiments, other PWM generators may be employed.

In the brushless DC motor embodiment, the three phase windings of the brushless DC motor are interconnected in a bridge circuit (Figures 11A and 11B) such that the motor drive current is always directed through a pair of windings and the motor conduction path is rotated or commutated through successive winding pairs to produce the motor drive torque. In this arrangement, the PWM pulses determine the time span of motor current flow and commutation switching logic based on the PWM pulses and Hall effect sensor feedback signals determine the winding pairs through which, and the direction in which, drive current is to flow.

In the DC brush type embodiment where an H type power amplifier bridge circuit is employed, DC brush type motor 54 (Figure 5) is operated in one direction when power amplifier switches 51-A1 and 51-B2 are opened under control of PWM output signals A1 and B2, and it is operated in the opposite direction when power amplifier switches 51-B1 and 51-A2 are opened under control of PWM output signals B1 and A2.

Referring back to Figure 3B, the three bit address signals generally are encoded to address eight registers (not shown) within the PWM generator 825A. Two registers are used to store voltage commands for each axis. A total of six registers are thus used to store voltage commands, and the remaining two registers store command and status data common to the three axes.

## PWM-GREATER DETAIL

As shown in Figure 6B, axis voltage command signals from the torque processor board 600 are received on the arm interface board 800 by a pair of bidirectional buffers 826 and 827. Circuitry on the AIF board 800 processes the voltage command data to develop digital TTL logic level signals to control the base or gate drive circuitry of the power amplifiers which supply the motor drive currents to the axis motors. As previously indicated, the motor currents and axis position and velocity data are fed back through the AIF board 800 to the higher level control loops for closed loop position, velocity and torque control.

Referring to Figure 6A, the pulse width modulation circuitry is preferably embodied in pair of LSI pulse width modulation (PWM) chips 828 and 829. Generally, the PWM chips 828 and 829 are specially designed from a standard Large Scale Integrated (LSI) gate array chip in which a multitude of isolated transistors are formed by a silicon mask deposit within a semiconductor wafer. In this case, circuitry is specifically implemented in a CMOS 3 micron, single metal, 1500 gate, gate array chip.

The desired circuit design is produced on the PWM chip by disposing a customizing metal mask on the chip to interconnect the transistor gates in a predetermined pattern which produces the desired circuitry.

Generally, the PWM chip operates as a microprocessor peripheral device (i.e., under the control of a microprocessor higher in the control loop configuration) to provide digital pulse width modulated signal generation for control of three axes having DC brush type motor drives. Among other embodiments, the PWM chip can be used with additional processing circuitry to provide PWM signal generation for three axes having DC brushless type motor drives.

Other general operating features include a diagnostic mode of operation which allows PWM ramp generation to be verified under microprocessor control without generation of output control signals. With respect to safety, a watchdog function disables PWM generation unless axis voltage commands are updated by the torque board microprocessor within three PWM cycles, software controls are used to enable and disable PWM generation, and programmed voltage limits independently prevent axis voltage commands from exceeding safe values.

A ramp generated internally by the PWM chip for the purpose of controlling output pulse width has a ramp frequency which can be controlled by an internal oscillator or by an external clock. Further, the PWM generates an interrupt signal synchronized to current feedback sampling and a current feedback sampling pulse synchronized to the PWM ramp.

With reference to Figure 6A, voltage command data is transferred to registers within the PWM chips 828 and 829 over a data bus 830. Command data for axes 1, 2 and 3 is sent to the PWM chip 828; command data for axes 4, 5 and 6 is sent to the PWM chip 829.

Address and control signals from the torque control manager on the torque processor board are coupled to an AIF address bus 831 (Figure 6B). A memory space decoder 832 responds to input signals and generates PWM select signal PWM1CS or PWM2CS which is applied to the PWM chip 828 or 829. It also generates MUXSET and CONVAD for analog to digital conversion control in the current feedback path, ADSTAT and ADDATA and RDHALL for data read control and LDTACK for data signal reception acknowledgements to a torque manager on the TP board 600 through gate control circuitry 833. A timing generator 833A delays for a predetermined time period the generation of the acknowledge signal. Within PWM chip 828 or 829, address signals XA1, XA2 and XA3 route each voltage command data signal from the data bus 830 to an internal axis command data register corresponding to the axis to which the command signals applies.

In a brushless DC motor embodiment of the invention, Hall effect sensors may be disposed about the drive motor stator periphery to generate magnetic rotor position signals for use in commutation switching control. A total of nine sensors are employed for each of the six axis motors (see Figure 14). RDHALL actuates either gate 834 or gate 835 to generate read signal HALLRU for axes 1, 2 and 3 or read signal HALLRL for axes 4, 5 and 6.

Safety/error control circuitry 837 responds to torque board reset signals PWMRES to provide PWM reset independently of other control reset signals so as to assure that the PWM output is not started until everything else in the system is initialized. In addition, PWM reset allows direct PWM shutdown for drive or other error without requiring that other parts of the control system be shut down. XARMER represents an error condition in which the two PWM chips are determined to be out of synchronization.

Three sets of output drive control signals from the PWM chip 828 are applied to a bus 838 called PWM A BUS (Figure 6A) for the three corresponding motor axes. Similarly, the output control signals from the PWM chip 829 are applied to a bus 839 called a PWM B BUS (Figure 6A) for the other three corresponding motor axes.

The output signal TES1 from the PWM chip 828 is a clock signal which is divided elsewhere on the AIF board to become the synchronizing signal VTICK for the higher level control loops.

A more detailed schematic diagram of the circuitry within the PWM chip 828 or 829 is shown in Figure 5B. The axis drive voltage commands are nine bit words in twos complement form and are stored in a tri-state bidirectional buffer 840 when received from the torque board. Decoder and select logic 846 controls data movement into and out of the buffer 840 in accordance with control signals from the torque control manager on the torque processor board 600.

The control signals include a device select signal CS, a read/write signal R/W, a data strobe signal DS, and a reset or initialization signal RES. In addition, three register address signals A0, A1, A2 are encoded to address any of eight registers within the PWM chip 838 or 839.

The data bus interface includes drives and inverters which ensure that data bus hold time requirements are met for operation with a 10 MHz 68000 processor. The outputs of the inverters provide the source for an internal input data bus which provides connection to all internal registers with write capability. An internal output data bus provides the source of data for the device output data bus tri-state drivers. Each register with read operation capability is interfaced to the internal output data bus through tri-state drivers.

Three like command channels are embodied within the PWM chip 828 or 829. The channels include respective phase generators 841, 842 and 843 which produce the output power amplifier drive signals in representation of the respective voltage commands for the respective axes. In other words, the PWM output drive signals for each axis are digital signals which are timed to turn on and off such that the power amplifier for that axis produces motor drive current in correspondence to the axis voltage command.

Two registers are employed as a double buffered hold register within each command channel to store the current voltage command for that channel. Double buffering enables validation of command data.

A total of six registers are thus used for holding voltage commands in the three command channels. The other two registers within the PWM chip 828 or 829 are used to store command and status information common to all three command channels.

A PWM register map is shown in Figure 6C. As illustrated in the device register map, two registers are associated with latching the voltage request for each of axis. One of the registers provides storage for the most significant 8-bits of voltage request, and the other register provides storage for the least significant bit of the voltage request for the axis. Selection of the 9-bit data bus portion forces the least significant bit register to be addressed whenever the most significant data register is addressed. The DX device pin used for interchange of data with the least significant bit register. Operation of the device with the 8-bit data bus option requires this device pin to be physically connected to the least significant bit of the data bus, i.e., data bit 0, external to the device. Operation of the device with the 9-bit data bus option requires the DX pin to be connected to the least significant bit of the data bus, i.e., data bit 7 in a typical 16-bit microprocessor environment. Selection of the 9-bit data bus option then requires all references to the voltage request registers implemented within the device be of the word type. Byte interchanges with the voltage request registers is not supported in this mode.

An eight bit up/down ramp counter 844 generates 512 clock pulses for each complete up/down or PWM cycle. The counter frequency is one half the external clock frequency, and it provides for synchronous operation of the ramp counter 844 and the current control loop.

To determine when the power amplifier is to be energized to supply motor drive current, the ramp counter output is coupled to a comparator 845 within the phase generator 841, 842 or 843 for the respective axes. The axis voltage command is also applied to the comparator 845, and a comparison between the voltage command and the count of the ramp counter 844 provides the basis upon which the widths of the digital output control pulses are defined to control the power amplifier switching and produce an effective motor voltage which satisfies the axis command voltage. Motor current, joint position and joint velocity feedback signals close the torque, position and velocity loops respectively as digital motor voltage control com mands are cyclically generated for each axis (once each 32 milliseconds).

The digital voltage command employs one bit to designate the sign of the voltage command (i.e., the motor rotation direction) and eight bits to designate the value of the voltage. Counts of the ramp counter 844 correspond to points in cycle time in the PWM cycle at which the power amplifier is switched to turn motor drive current on or off. In effect, counts along the counting ramp therefore correspond to effective motor voltage which can be compared to the command motor voltage to determine when power amplifier switching should occur to satisfy motor voltage commands.

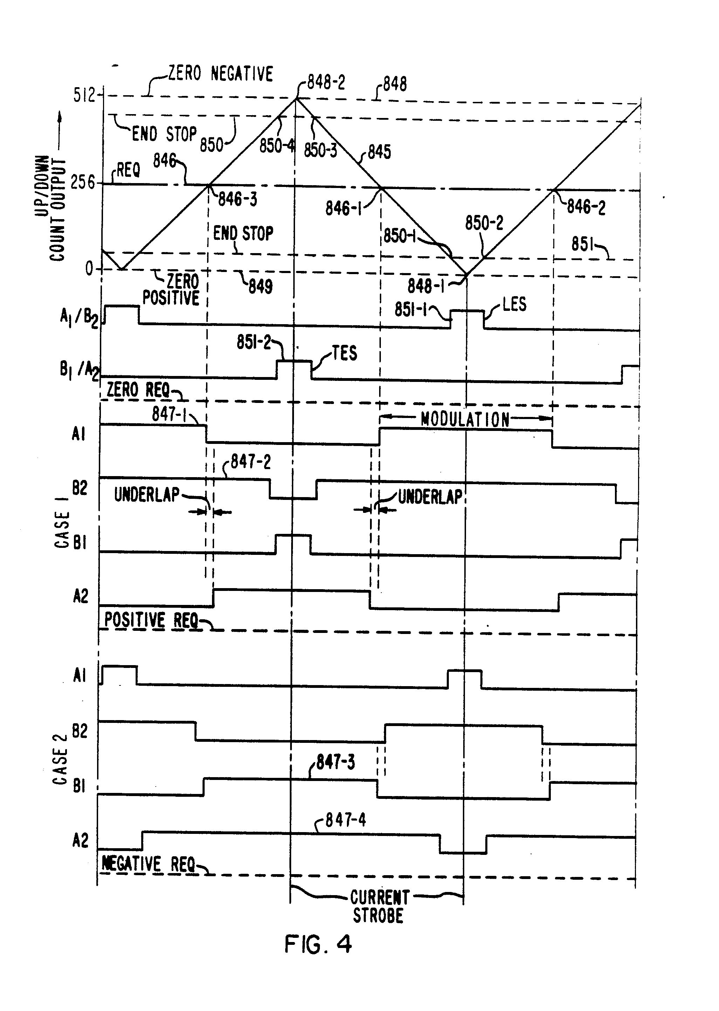

The modulation system used to generate digital switching signals which satisfy axis voltage commands is illustrated in Figure 4. The up/down counting output of a PWM ramp counter 844 is represented by a saw tooth wave 845 with a top dashed rail 848 corresponding to a zero negative motor voltage command with increasing negative voltage commands corresponding to decreasing ordinate values. Bottom rail 849 dashed similarly corresponds to a zero positive motor voltage command with increasing positive voltage commands corresponding to increasing ordinate values. The output control pulses A1, A2, B1, B2 are used to control either the DC brush H bridge type power amplifier of Figure 5 or, with additional processing circuitry, the DC brushless power amplifier of Figure 11A, B. In explaining the operation of the PWM wave the DC brush type embodiment of Figure 5 will be referenced.

Generally, the width of an output control pulse is logically determined by scaling the voltage request or command (horizontal line 846 corresponding to a counter count of 256) along the ordinate for the counter sawtooth waveform 845 according to the magnitude of the voltage command. In illustrative Case No. 1, positive voltage commands are scaled upward from end point 848-1 and intersect points 846-1 and 846-2 define the width of the re sultant A1 control pulse 847-1 needed to execute the commanded positive motor voltage (with B2 enabling pulse 847-4 on as shown). With A1 and B2 on, current flows through the motor 54 in the positive direction to the right in Figure 5.

In illustrative Case No. 2, negative voltage commands are scaled downward from end point 848-2 and intersect points 846-3 and 846-1 define the width of the resultant B1 control pulse 847-3 needed to execute the commanded negative motor voltage (with A2 enabling pulse 847-3 on as shown). With B1 and A2 on, reverse motor current flows through the motor 54 to the left in Figure 5.

For a zero voltage command, forced negative and positive end stop control voltages represented by dotted lines 850 and 851 produce an effective motor voltage of zero but provide assurance that current is always flowing through the motor rotor to enable rotor current sensing, i.e. magnitude and polarity sensing, for feedback control with the use of a single power amplifier resistor in the brushless DC motor embodiment (see Figures 11A-11B) or the DC brush type motor embodiment (see Figure 5).

While current samples can be obtained to provide current amplitude and direction knowledge for each leg of a bridge by using sense circuitry within a power block, for example by using a resistor and associated transmitting circuitry in each bridge leg, the power block cost is then significantly greater since relatively complex circuitry is required. Further, the resolution of some current sensing problems may be extremely difficult at best and practically irresolvable at worst.

With the use of a single sense resistor, it becomes important to determine whether the direction and amplitude of motor current will be known under all operating conditions. For example, in the H-type bridge, the motor current can flow in either the forward or reverse direction through the motor while constantly flowing in the same direction through the current sense resistor.

As another example, there are various conditions under which regenerative currents flow through the motor but not through the current sense resistor unless provisions are made in the current sense system to account for the regenerative currents. Thus, if a positive voltage motor command is abruptly dropped to zero, the stored inductive energy in the motor will produce a regenerative current that circulates in a diode loop through the power switch/diode circuitry within the power pack without passing to the power supply through the current sense resistor and it will go undetected unless provision is made to assure its detection.

With the use of the described end stop pulses, power switches are always turned on at the ends of each PWM cycle to force any regenerative motor current to flow through the power supply and the current sense resistor thereby enabling motor current detection even if the motor voltage command is then zero. While each end stop pulse exists for a short period of time, it produces a small motor current that persists until the next end stop pulse or control pulse. Similarly, the next end stop pulse produces a small but reverse motor current that persists until the next cycle starts. Thus, a small motor ripple current results from successive end stop pulses in the absence of control pulses, but the average value of the ripple current is zero so that it has essentially no effect on the current, position and velocity control of the motor.

Current samples are taken once each PWM cycle so that current feedback signals are made available synchronously with control loop operation. Preferably, current samples are obtained at the midpoint of a preselected one of the two end stop pulses in each PWM cycle so that the sample value is the average motor current value for the PWM cycle during which the sample is taken.

Thus, from a basic control standpoint, there is no need for current samples to be obtained more frequently than once each PWM cycle and for this reason it is pre ferred that the current sampling frequency rate be equal to the PWM cycle frequency. However, the current sampling rate may be different from the PWM cycle frequency but in any case it should be synchronous with the PWM cycle for accurate control action.

As an alternative, the current sampling rate might be set at twice the PWM cycle frequency, i.e. a current sample at each end stop pulse, and the purpose of this arrangement could be to enable a control system equipped with suitable logic to select for control use in each PWM cycle the best of the two current samples in that PWM cycle. For example, under certain operating conditions, noise may make a sample at one end stop less accurate than a sample at the other end stop in a PWM cycle and software logic could be employed to select one (the best) of the two samples.

Circuitry associated with the up/down counter 844 senses the cycle count to initiate power amplifier switching in both the positive end region and the negative end region of the sawtooth counter waveform thereby producing forced motor current at both ends of the counter waveform even if the received motor voltage command is zero (i.e., near and at the maximum positive count and the maximum negative count).

As shown in Figure 4, intersect points 850-1 and 850-2 define the width of the positive A1 end stop control pulse 851-1. Similarly, intersect points 850-3 and 850-4 define the width of the negative B1 end stop control pulse 851-2.

Since the conducted currents are equal but opposite over the two end stops in each PWM cycle, the effective end stop motor current during each PWM cycle is zero. The end stop currents are produced regardless of the level of the motor voltage command, and calibration of the up/down counter count to motor voltage level for comparison with command voltage in the comparator 845 takes the end stop currents into account.

End stop switching is produced by four signals generated at the output of the PWM chip by decoding the up/down counter contents.

Two of the end stop switch signals are associated with the lower extremity of the ramp, the center of which represents the positive request modulation midpoint. This extremity is referred to as the lower end stop. Similarly, two of the end stop signals are associated with the upper extremity of the PWM ramp, which represents the negative request modulation midpoint and is referred to as the upper end stop.

Within the lower end stop, one of the signals LEG forces PWM drive signals B1 and A2 to be non-asserted, and the other end stop signal LES forces PWM drive signals A1 and B2 to be asserted.

Within the upper end stop, one of the signals TEG forces PWM drive signals A1 and B2 to be non-asserted, and the other lower end stop signal TES forces PWM drive signals B1 and A2 to be asserted. The ramp end stop signals, TES and LES, are made available as device output signals.

Command and status information common to all three axes include an overall PWM enable signal and a PWM ramp cycle interrupt.

Other PWM chip functions common to all three axes primarily involve safety related features including a watchdog timing circuit and an absolute voltage request limiter. The watchdog timer of Figure 5B is implemented by counting PWM ramp cycles, and it disables PWM generation if voltage commands fail to be issued to any of the three voltage command registers within the time required for generation of two sample pulses, which equates to four consecutive PWM ramp cycles. Axis runaway conditions are thus prevented due to failure of the controlling microprocessor to update voltage commands in a timely manner.

The absolute voltage request limit circuitry is equivalent to an adjustable voltage clamp on each of the drives. The voltage clamp operates independently of the voltage command on a per channel basis. The voltage limit is set by writing to register 0. A single voltage limit value is used for limiting the voltage output for all three axes implemented within the PWM chip. The voltage limiter comprises a holding register for storage of the limit value and a 4-bit comparator. This provides sixteen limit ranges.

Initialization or reset of the PWM chip results in all voltage command registers being set to zero and all PWM drive signals being forced to the nonasserted state. The reset state is maintained until a specific command is issued to the command register by the controlling microprocessor. Once enabled, PWM signals are generated in accordance with the command voltage value for each of the three channels until either a specific command is issued to disable PWM generation or until the watchdog timer timeout expires.

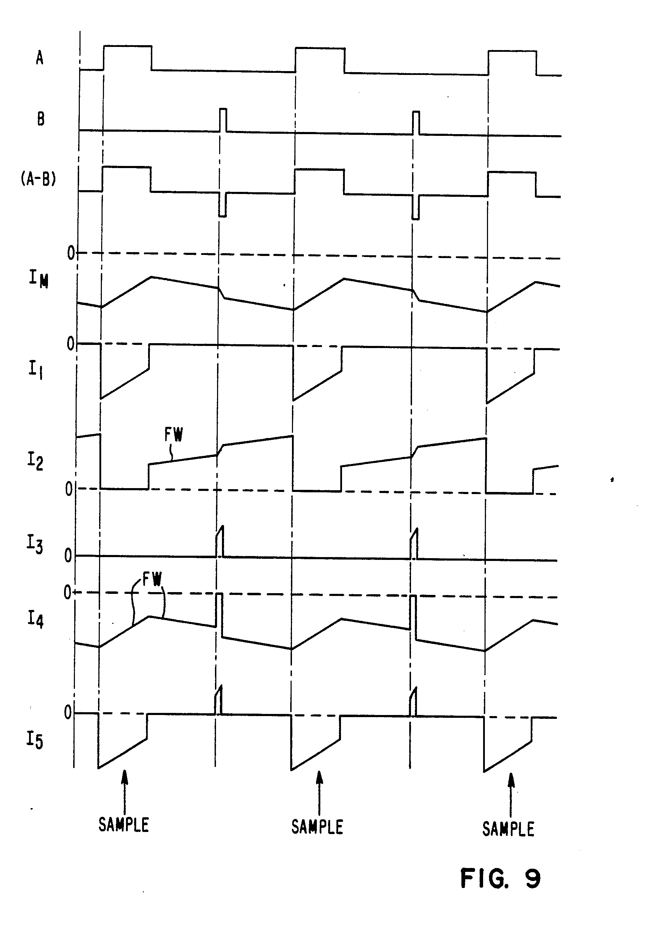

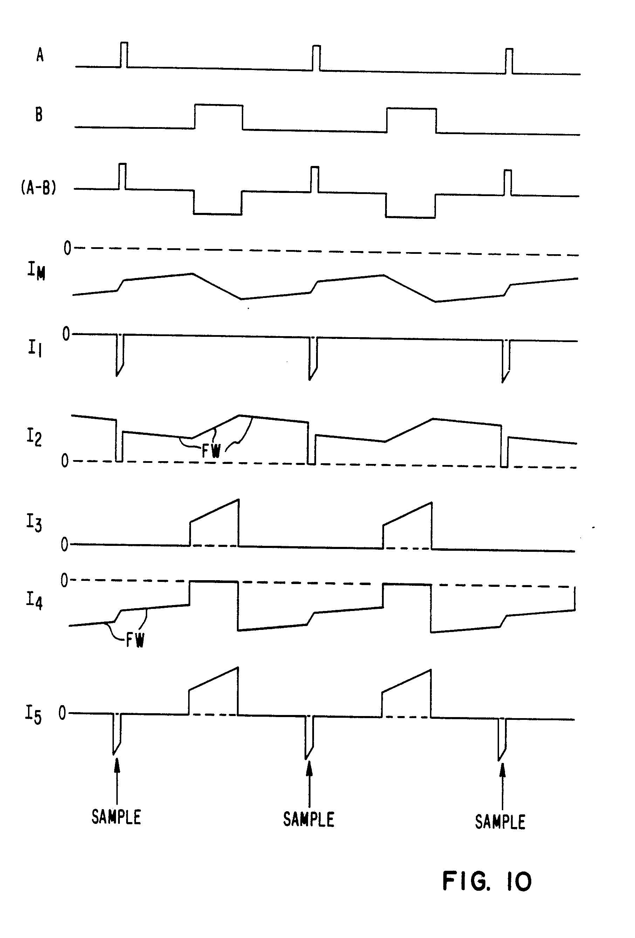

With reference to Figure 5B, the ramp counter also operates a strobe generator 852 to produce a current sampling signal SAMPL, preferably precisely at each cycle end point 848-1 or 848-2 (i.e. at 4 KHz in the 860 robot). The signal SAMPL triggers a coupling of the sensed feedback current from the power amplifier of Figures 9 or 10 with the current control loop once each PWM cycle (for either a positive or a negative voltage command) in synchronism with the execution of current control loop calculations. As one alternative, the SAMPL frequency may one half that of the PWM cycle frequency.

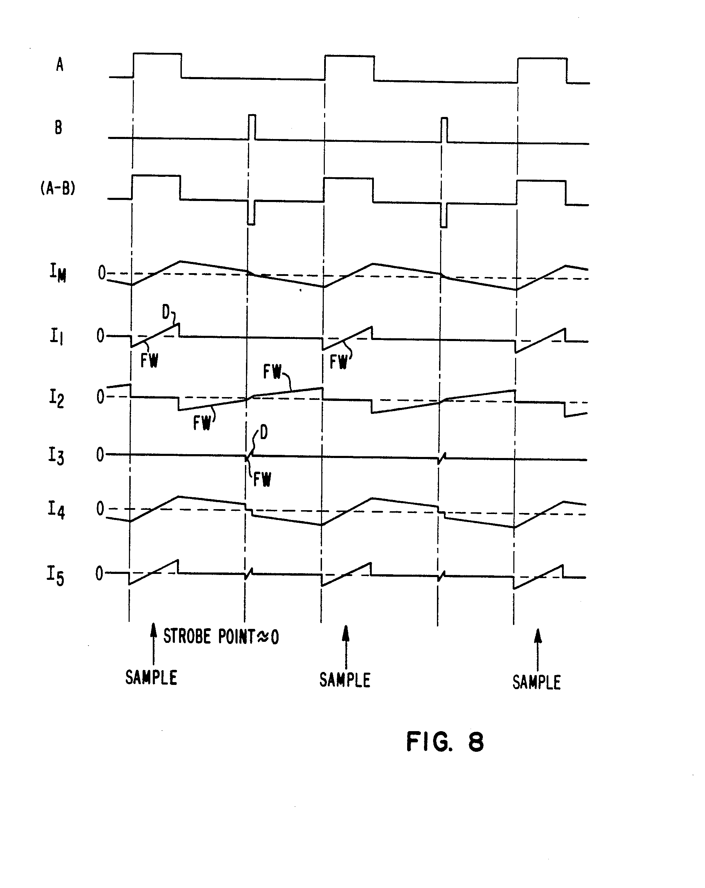

Within gate logic circuitry 847, polarity detection circuitry determines which drive signals are to be asserted, i.e., which switches in the power amplifier are to be operated to produce the command motor direction. In addition, underlap protection circuitry prevents simultaneous enabling of switches on the same side of the power amplifier H bridge (Figure 10), i.e., prevents simultaneous opening of cross-conducting switches. For this purpose, a short time gap indicated between dotted line pairs in Figure 8 is imposed for both switches on the same side of the bridge circuit to be off (i.e., switches which would produce a short across the power supply if they were on simultaneously) so as to allow for switching time.

Initialization of the PWM device results in all voltage command registers being set to zero command and all PWM drive signals being forced to the nonasserted state. This state is maintained until a specific command is issued to register 1 by the controlling microprocessor. Once enabled, PWM signals are generated in accordance with the command value for each of the three channels until either a specific command is issued to disable PWM generation or until the watch dog timer timeout expires.

Diagnostic capability is also provided by the PWM chip. The up/down counter 844 can be incremented or decremented under control of the microprocessor interface, and the counter contents can be read by the microprocessor interface. This provides assurance that the counter is completely functional before enabling PWM generation.

## H BRIDGE POWER AMPLIFIER - DC BRUSH TYPE MOTORS

An H bridge power amplifier or block 50 of the low cost hybrid type is shown in Figure 5, and one of the power blocks 50 is employed to provide motor drive current for each robot arm joint motor in DC brush type motors.

The power block 50 includes four semiconductor switches 51-A1, 51-A2, 51-B1 and 51-B2. Respective protective back voltage diodes 52 are connected across the respective semiconductor switches to permit the flow of freewheeling currents when the switches 51-A1 and 51-B1 are turned off.

The switches and diodes are packaged within a block indicated by dotted line 53. As previously indicated, no internal control circuitry is included in the hybrid type power block thereby enabling flexible configuration of external controls.

A robot joint DC brush type motor 54 (representative of any of the joint motors included in the Unimation 700 series robot arm of Figure 1) is connected in a crosspath 55 of the H bridge circuit. When switches 51-A1 and 51-B2 are turned on, a positive voltage is applied across the motor 54 and current flows to the right in the crosspath 55 to drive the motor in the forward direction. With switches 51-B1 and 51-A2 turned on, current flows through the crosspath 55 in the opposite direction to drive the motor in the reverse direction. The digital pulses A1 and B1 precisely control the on time of the switches 51-A1 and 51-B1 respectively so as to produce the motor current needed to satisfy control commands. The pulses A2 and B2 control the on time of the switches 51-A2 and 51-B2 so that the B2 and A2 on times respectively embrace the A1 and B1 on times (thereby providing closed paths for motor drive current during A1, B1 on time and circulating paths for motor freewheeling currents during A1, B1 off times) and so that the 51-A1 and 51-A2 switches are not on at the same time and the 51-B1 and 51-B2 switches are not on at the same time (to avoid shorting the power supply).

The digital pulse pairs A1, B2 and B1, A2 determine the switch on time for forward motor drive current and reverse motor drive current respectively. In turn, the switch on time determines the motor energization level, i.e., the motor torque.

Switch base leads 56 extend from the switches to the outside of the block 53 where switch drive signals A1, A2, B1 and B2 are coupled from the pulse width modulator. Power supply voltage V is connected across external supply leads 57 and 58 to provide the motor drive current. An external current sensing resistor 59 is connected in series between the lead 57 and the power supply. Conductors 60 and 61 are connected from the two resistor terminals to apply the voltage drop across the current sensing resistor to the current feedback circuitry on the AIF board where it is processed for use in the current or torque control loop.

## MOTOR DRIVE CURRENT FEEDBACK - TORQUE CONTROL

Feedback circuitry used to process the motor drive current feedback signals from the respective power amplifier feedback resistors for the six joints is shown in Figures 12A-12C. The current feedback circuitry includes respective feedback channels 873-1 through 873-6. Each feedback channel includes a differential operational amplifier 874 having its output coupled to a sample and hold circuit 875. A programmed array logic (PAL) device 876 generates sample time signals 876-1 and 876-2 under PWM synchronizing control 1FBSCK. The sample/hold feedback signals from all of the joints are coupled to an analogto-digital converter 877 through a multi-channel analog multiplexer 878 under the control of a channel control latch 879. The digital motor current feedback signals are coupled to the P2 data bus (see Figure 3B) for use by the digital controls on the torque processor board 600.

The voltage drop across the current sensing resistor 59 is sampled or strobed by the control system to produce a feedback current reading once each PWM cycle at the zero positive point of the PWM ramp, i.e., at the midpoint of the lower end stop. As such, the feedback current sample represents the average current flowing through the motor during the associated PWM cycle under all operating conditions.

## PROOF THAT CURRENT SAMPLE IS AVERAGE VALUE

The current sampling technique always measures the average value of current flowing through the motor. The model configuration shown in Figure 11C exists. Switches S1, S2, S3, S4 are controlled to yield the voltage shown in Figure 11D applied from point A to point B.

- T is the period of pulse width modulation (PWM).
- Applied voltage $V_{(A-B)}$ is always modulated symmetrically about time $t = 0$ for positive applied voltage and modulated symmetrically about

$t = \frac{T}{2}$ for negative applied voltages.
- Current sampling is always done at $t = 0$ (or an integer multiple of T).

$$V_{(A-B)}(t) = i(t) \cdot Z_m + EMF_{motor}, \quad \text{where } Z_m = R_m + j\omega L_m$$

or

$$V_{(A-B)}(t) - EMF_{motor} = i(t) \cdot Z_m, \qquad EMF_{motor} \text{ has only a DC}$$
$$= V(t) \qquad\qquad\qquad\qquad \text{component}$$

V(t) can be expressed a summation of fourier components in following manner:

$$V(t) = \frac{a_o}{2} + \sum_{n=1}^{\infty} a_n \cos n\,\omega_o t + \sum_{n=1}^{\infty} b_n \sin n\,\omega_o t$$

where $\omega_o = 2\pi/T$, n is any integer 1 to $\infty$, and $a_o/2$ is equal to the average value of V(t).

Since V(t) is an even valued function (i.e. $V(t) = V(-t)$), it can be shown that all values of $b_n$ are equal to zero and the value of each $a_n$ is given by

$$a_n = \frac{4}{T} \int_0^{T/2} V(t)\, \cos n\,\omega_o t\, dt$$

thus, we have

$$V(t) = \frac{a_o}{2} + \sum_{n=1}^{\infty} a_n \cos n\,\omega_o t\, dt = i(t) \cdot Z_m.$$

The rules of superposition apply to this function so we can express the $i(t) \cdot Z_m$ as a summation of terms where each component can be equated to the corresponding frequency component given for V(t).

$$\therefore \ i(t) \bullet Z_m = I_{AVG} \bullet Z_m(d.c.) + \sum_{n=1}^{\infty} i(n\omega_o t) \bullet Z_m(n\omega_o t)$$

where $I_{AVG}$ is average current flow in the motor, $Z_m(d.c.)$ is motor impedance at zero frequency, $i(n\omega_o t)$ and $Z_m(n\omega_o t)$ are current and impedance components at respective integer multiples of $n\omega_o$.

Now $Z_m = R_m + j\omega L_m$ at any value of $\omega$ and we can write $i(t)$ as a summation of individual frequency components expressed by:

$$i(t) = \frac{V(t)}{Z_m(t)} = \underbrace{\frac{a_o}{Z(R_m + j \bullet 0 \bullet L)}}_{I_{AVG}} + \sum_{n=1}^{\infty} \frac{a_n \cos n \omega_o t}{Z_m(n\omega_o t)}$$

Examining $Z_m(n\omega_o t)$ we have $Z_m = R_m + j\, n\, \omega_o L_m$ where $\omega_o L_m > > R_m$ for all values of $n > 0$.

Therefore, we can write
$Z_m(n\omega_o t) = j\, n\, \omega_o\, L_m$ and

$$\sum_{n=1}^{\infty} \frac{a_n \cos n \omega_o t}{Z_m(n\omega_o t)} = \sum_{n=1}^{\infty} \frac{a_n \cos n \omega_o t}{j_n \omega_o L_m)}$$

which is equivalent to

$$\sum_{n=1}^{\infty} \frac{a_n \sin n \omega_o t}{n\omega_o m}$$

Now <u>current samples are always taken at times</u> when t is equal to $xT = x\, 2\pi/\omega_o$ ($x = 0,1,2,3,-- \infty$) and the instantaneous value of $\sin n\, \omega_o t = \sin n\, 2\pi x \equiv 0$ for all integer values of n and x.

$\therefore$ At the sampling point, $i(t) = I_{AVG} + 0$ which is what we want.

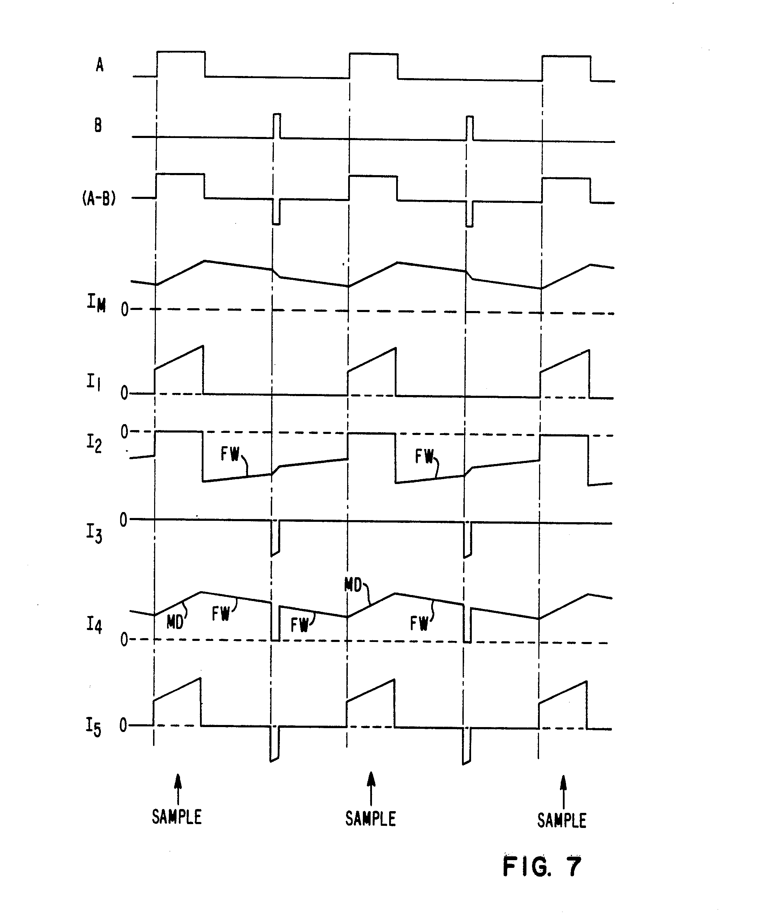

For a zero motor voltage command (or a zero current requirement), the average motor current over the PWM cycle is zero because the end stop motor pulses are equal and opposite. Figure 6 depicts this standstill case. The symbols in Figure 6 (and Figures 7-10) have reference to the symbols shown in the Figure 5 diagram).

A and B represent the potentials at circuit points A and B and the quantity A-B represents the voltage across the motor as a function of time. The motor voltage pulses result from the end stop control pulses TES and LES and average to zero.

The motor current caused by the voltage pulses is designated by $I_m$. The sensing resistor current is designated by $I_5$ and it is strobed at the midpoint of the end stop pulse - where the sensing resistor current is zero corresponding to the average value of the motor current $I_m$ over the PWM cycle which is also zero.

In Figures 7-10, various additional operating conditions are shown and in these figures currents I1 through I4 are graphed to show the flow of freewheeling currents during time periods when motor drive current is turned off. Freewheeling portions of the various current waveforms are designated by the letters FW. Motor drive portions of the current waveforms are designated by the letters MD.

Figure 7 pertains to the case of acceleration and Figure 8 relates to the case of steady state rotation. Figure 9 relates to the case of a speed drop while Figure 10 depicts the case of braking, i.e., the application of an opposite polarity voltage to the motor. In all these cases, the feedback current sampling occurs at the end stop pulse midpoint as shown and represents the average value of the motor current $I_m$ during the associated PWM cycle.

## BRUSHLESS DC MOTORS

In Figures 11A-11B, there is shown a three phase power amplifier employed in another embodiment of the invention for brushless DC motors. Generally, a single resistor can be employed with any power amplifier bridge circuit and provide sampled current feedback signals which represent the average motor current in the PWM cycle regardless of the number of legs in the bridge circuit.

In Figure 11A, there is shown the stator winding circuitry for DC brushless motors employed as axis drives in various robots including the Unimation 860 robot which is more powerful than the Unimation 700 Series robot shown in Figure 1.

Power switch circuitry for the windings is shown in Figure 11B. The switches are operated to direct current through two of the three windings at any one point in time, and the winding connection switching is rotated about the windings under PAL control. The effective magnitude of the motor current depends on the switch ON time which in turn is controlled by the PWM output.

Command register bit assignments in the PWM chip and the input/output signal configuration for the chip are set forth in Appendix A1.

## POWER AMPLIFIER FOR BRUSHLESS DC MOTORS

A commercially available, low cost hybrid power amplifier block 60 (Figure 11B) is provided for energizing the DC brushless motor windings (see Figure 11A). As indicated by the dotted box, the power amplifier block 60 is packaged to include the six semiconductor switches 61-1 through 61-6 needed for operating the three phase windings of the brushless DC motor. The block 60 is a low cost power amplifier mainly because the device is packaged to contain a simple switching circuit configuration without internal control loops.

The power amplifier block 60 is provided with external power supply terminals 62-1 and 62-2. A current sense resistor 63 is connected to the terminal 62-2 for series connection to the power supply so as to provide motor current feedback signals for control loop operation.

The power amplifier block 60 additionally includes external terminals 64-1, 64-2 and 64-3 for respective connection to the free ends 65-1, 65-2 and 65-3 of the Y connected motor windings of Figure 11A. External terminals 66-1 through 66-6 are also provided for application of the switch control signals U1 and U2, V1 and V2 and W1 and W2 from the PWM commutation circuitry. To prevent power supply shorting and switch burnout, the power switches are always controlled so that only one switch can be on at a time in each of the respective pairs of switches 61-1 and 2, 61-3 and 4, and 61-5 and 6.

The control signals U1, V1 and W1 are the basic pulse width control signals that control the level of drive current through the motor windings. The control signals U2, V2 and W2 enable the six motor windings conduction paths in rotation and generally provide for the flow of freewheeling motor currents.

The following listing along with Figures 11A and 11B provides a more complete understanding of the rotating (commutated) motor conduction paths and how the power switches operate to rotate the motor conduction paths and produce the rotating rotor gap magnetic flux which drives the rotor:

| Path | Switches Turned On | Windings Serially Connected |
|------|--------------------|------------------------------|
| 1 | U1-V2 | U-V |
| 2 | U1-W2 | U-W |
| 3 | V1-W2 | V-W |
| 4 | V1-U2 | V-U |
| 5 | W1-U2 | W-U |
| 6 | W1-V2 | W-V |

## POWER AMPLIFIER CONTROL SIGNALS

AIF board circuitry shown in Figure 13A-13F for each of the six robot axes is used to generate the power amplifier control signals U1 through W2 from the PWM signals A1, A2, B1 and B2 and couple the same to the power amplifier output terminals on the AIF board 800.

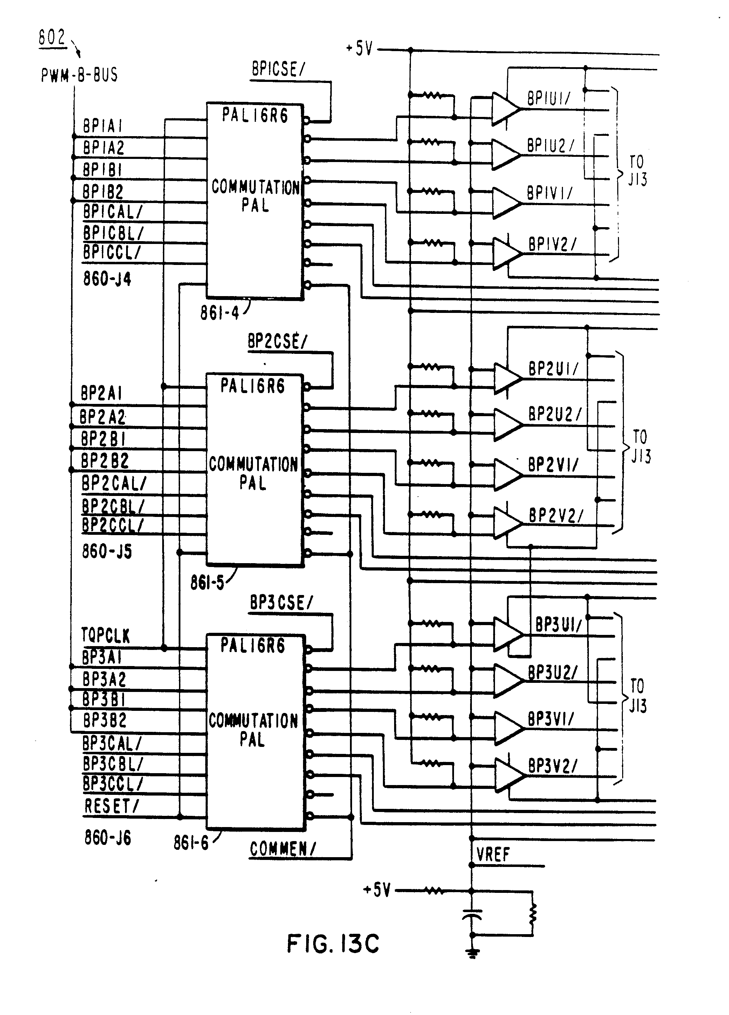

Separate drive circuit channels 860J1-860J6 (Figs. 13A and 13C) are provided on the AIF board 800 to process and couple the PWM digital outputs to the power amplifiers for the respective robot joint motors. Since the drive circuit channels are alike, only the channel 860J1 will be described.

At the input of the drive circuit channel 860J1, the PWM-A digital drive pulses AP1A1-2 and AP1B1-2 are applied to a PAL device 861-1. As previously described, the A and B pulses are time shifted, the A2 and B2 pulses are relatively wide enable pulses and the A1 and B1 pulses have varying time width to function as control pulses (within the B2 and A2 time spans, respectively).

In addition, feedback commutation signals AP1-CAL-CDL-CCL from the joint 1 brushless DC motor are applied to the PAL device 861-1. As shown in Figure 14-1, three Hall effect sensors 864-1, 865-1, 866-1 are disposed about the periphery of the joint 1 motor to respond to magnetic flux changes and indicate the position of the rotor and which way the rotor is moving. Like sensors are employed for each joint motor as shown in Figures 14-1 through 14-4. Each sensor signal is routed to a comparator 867 which operates a gate 868 when the sensor signal reaches a reference level.

The nine gate output signals from the nine comparator circuit channels which process the Hall effect sensor signals from joint motors 1, 2 and 3 are applied to a latch register 869 which in turn generates commutation signals for the commutation PALS 861 (Figure 13A). A latch register 870 (Fig. 14-4) similarly generates commutation signals that are applied to the PALS 861 (Fig. 13C) for joint motors 4, 5 and 6. Respective buffers 871 and 872 access the commutation signals to the P2 data bus for the torque processor board 600 thereby providing a basis for generating the commutation signals which control the switching of winding connections, i.e., control over which two of the three motor windings receive the motor drive current pulses.

Thus, the PAL device 861-1 logically operates analog driver circuits 862, 863 and 864 to generate commutation timed signal sets APAU1-U2, AP1V1-V2 and AP1W1-W2 for application to the power amplifier switches which in turn direct motor drive current pulses through the joint 1 motor windings in accordance with the commutation control and in accordance with the pulse width modulation control. The currents through the windings of the other joint motors are similarly controlled by the other PAL devices 861.

A simplified schematic of the commutator PAL devices 861J1-J6 is shown in Figure 13E as a commutator PAL device 861 with input signals A1, A2, B1 and B2 from the PWM and HA, HB and HC from the Hall sensors and output signals U1 through W2 to the power amplifier. The PAL device is a commercially available programmable array logic device which is programmed with the following logic equations to generate the designated outputs from the applied inputs:

$$U1 = A1 \cdot HA \cdot \overline{HB} + B1 \cdot \overline{\overline{HB}} \cdot HB$$
$$U2 = A2 \cdot HA \cdot \overline{HB} + B2 \cdot \overline{\overline{HB}} \cdot HB$$
$$V1 = A1 \cdot HB \cdot \overline{HC} + B1 \cdot \overline{\overline{HB}} \cdot HC$$
$$V2 = A2 \cdot HB \cdot \overline{HC} + B2 \cdot \overline{\overline{HB}} \cdot HC$$
$$W1 = A1 \cdot HC \cdot \overline{HA} + B1 \cdot \overline{HC} \cdot HA$$
$$W2 = A2 \cdot HC \cdot \overline{HA} + B2 \cdot \overline{HC} \cdot HA$$

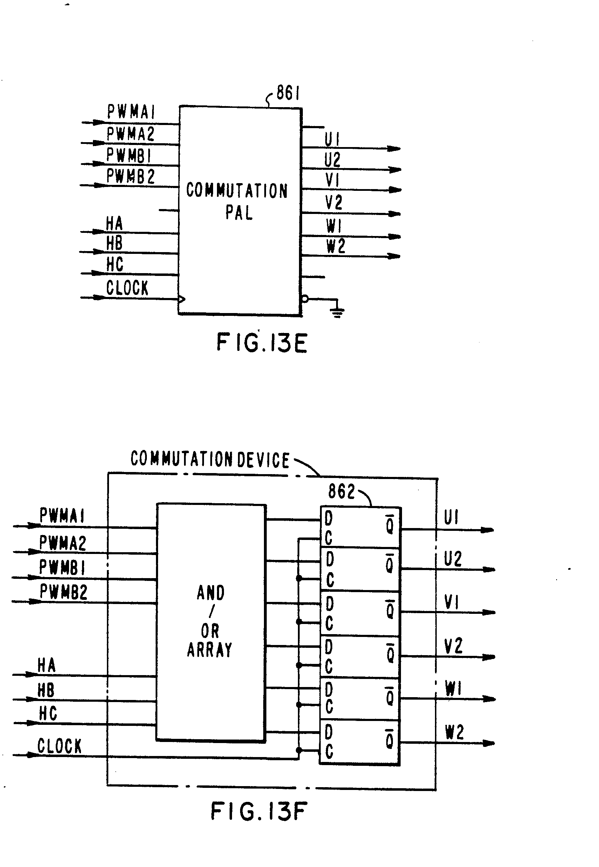

As shown in Figure 13F, the power amplifier control pulses U1 through W2 are logically controlled by block 862 to be synchronized with the clock pulses C.

The waveforms shown in Figure 15 show more clearly the manner in which the various pulses are related. At the top of the graph, the Hall effect rotor position signals are observed to be overlapping pulses which are phase shifted by 60 electrical degrees.

The A1 and B2 pulses are being generated to produce motor drive current in the forward direction. Thus, the B2 pulse is a wider enabling pulse that embraces the A1 pulse but is off during the on time of the B1 pulse. The width of the A1 pulse provides control over the switch on time in the power amplifier.

The A2 pulse is a wider enabling pulse for the B1 pulse which in this instance is a narrow end stop control pulse explained more fully elsewhere herein. Generally, both the A1 and B1 pulses are implemented to force current conduction through the connected motor winding at both ends of the PWM ramp even if the control command is not otherwise calling for drive current.

The PAL generated power amplifier drive signals U1 through W2 are shown at the bottom of the graph. The successive winding connection states (or motor conduction paths) 1 through 6 are designated between the vertical dotted time lines.


## APPENDIX

### Command Register Bit Assignments

Command Bit 7:
   This bit provides the capability for software control of overall PWM generation. Writing this bit to a "1" enables PWM generation. Writing this bit to a "0" disables PWM generation.

Command Bit 6:
   This bit provides the capability for software control of the PWM ramp clock, provided PWM generation is disabled. This bit being in the logical "0" state selects command bit 5 as the source for the PWM ramp counter clock. This bit being in the logical "1" state selects the external clock as the source for the PWM ramp counter clock. Enabling PWM generation forces selection of the external clock.

Command Bit 5:
   This bit provides the capability for software clocking of the PWM ramp counter. The PWM ramp counter will be clocked upon transition of this bit to the logical "1" state provided command bits 6 and 7 are in the logical "0" state.

Command Bit 4:
   Not implemented.

Command Bits 3 through 0:
   These command bits provide input to a voltage request limiter register. This limiter acts as an absolute clamp for all voltage request registers.
Assignment of the status data bits for command/status register is given in Figures 3-5.

Status Bit 7:

This bit reflects the present PWM generation status. This bit being at a logical "1" indicates that PWM generation is enabled. This bit being at a logical "0" indicates that PWM generation is disabled. PWM generation can be disabled either by setting the command bit 7 to the logical "0" state or by expiration of the internal watchdog timer. The state of this bit directly determines the state of the PWM enable external status signal, device pin 33.

Status Bit 6:

This bit reflects the device interrupt request status. This bit being in the logical "0" state indicates no interrupt request is present, and this bit being in the logical "1" state indicates that an interrupt request is pending. Device pin 35, Interrupt Pin reflects the inverted state of this bit. This combination, external signal pin and internal status bit, permits operation of the device in either polled or interrupt driven applications. This bit is set to the logical "1" state by current sample pulse generation, and is reset by writing to any of the device voltage request registers.

Status Bit 5:

This bit provides an interrupt overrun status indicator. This bit is set to the logical "1" state by expiration of the internal watchdog timer. Once set, PWM generation will be disabled, and the device must be re-initialized to reset the bit and enable PWM generation.

Status Bit 4:

Not implemented, always read as a logical "0".

Status Bits 3 through 0:

These status bits directly reflect the value written to the voltage request limit register, command bits 3 through 0.

## INPUT/OUTPUT SIGNALS

| Symbol | Pin No. | Type | Name and Function |
|--------|---------|------|-------------------|
| A2-A0 | 3-1 | I | Address: Used to select one of the seven internal registers for read or write operations. |
| D7-D0 | 14-8 | I/O | Data: Bi-directional, three state, data bus signal lines. D7 represents the most significant bit. |

| | | | |
|---|---|---|---|
| DX | 15 | I | Data: Bi-directional, three state, data bus signal line. Represents least significant bit of voltage reference commands. |
| DOPT | 16 | I | Data Bus Option: Hardwired signal input used to specify system data bus width. Connected to ground for 16-bit data bus. Microprocessor must use word operations for interchange with the device. This requires D7 be connected to the data bus most significant bit. Connected to +5v for 8-bit data bus. |
| CSb | 4 | I | Chip Select: Low asserted input used to indicate that the device is being selected for information interchange. |
| WRb | 5 | I | Write: Read/Write control input. |

Used to specify the transfer direction for information interchange. Low asserted for write operations.

| Symbol | Pin No. | Type | Name and Function |
|---|---|---|---|
| DSb | 6 | I | Data Strobe: Low asserted signal input used to indicate that the device is to either accept or apply data to the data bus. |
| DTACKb | 7 | O | Data Transfer Acknowledge: Open collector, low asserted output used to indicate that the transfer can be terminated. |
| RESb | 19 | I | Reset: Low asserted input used to initialize all device internal registers. |
| P1A1 | 21 | O | Axis 1, A Side, Upper Drive: High asserted output used to control the upper device on the A side of an "H" bridge. |
| P1A2 | 22 | O | Axis 1, A Side, Lower Drive: High asserted output used to control the lower device on the A side of an "H" bridge. |

16

| | | | |
|---|---|---|---|
| P1B1 | 23 | O | Axis 2, B Side, Upper Drive: High asserted output used to control the upper device on the B side of an "H" bridge. |
| P1B2 | 24 | O | Axis 1, B Side, Lower Drive: High asserted output used to control the lower device on the B side of an "H" bridge. |
| P2A1 | 25 | O | Axis 2, A Side, Upper Drive: High asserted output used to control the upper device on the A side of an "H" bridge. |
| P2A2 | 26 | O | Axis 2, A Side, Lower Drive: High asserted output used to control the lower device on the A side of an "H" bridge. |
| P2B1 | 27 | O | Axis 2, B Side, Upper Drive: High asserted output used to control the upper device on the B side of an "H" bridge. |
| P2B2 | 28 | O | Axis 2, B Side, Lower Drive: High asserted output used to control the lower device on the B side of an "H" bridge. |
| P3A1 | 29 | O | Axis 3, A Side, Upper Drive: High asserted output used to control the upper device on the A side of an "H" bridge. |
| P3A2 | 30 | O | Axis 3, A Side, Lower Drive: High asserted output used to control the lower device on the A side of an "H" bridge. |
| P3B1 | 31 | O | Axis 3, B Side, Upper Drive: High asserted output used to control the upper device on the B side of an "H" bridge. |
| P3B2 | 32 | O | Axis 3, B Side, Lower Drive: High asserted output used to control the lower device on the B side of an "H" bridge. |
| PWMEN | 33 | O | PWM Enabled: High asserted signal output which provides external indication that PWM generation is enabled. |

17

| | | | |
|---|---|---|---|
| TES | 18 | O | Top End Stop: High asserted signal output which provides external indication that the PWM ramp is within the upper end stop ramp region with B side upper drive and A side lower drive devices on. |
| LES | 36 | O | Low End Stop: High asserted signal output which provides external indication that the PWM ramp is within the lower end stop ramp region with A side upper drive and B side lower drive devices on. |
| SAMPb | 34 | O | Sample: Low asserted current sample strobe signal. This signal has the same ramp time relationship as LES; however, SAMPb is only asserted every other ramp time. |
| OCSF | 38 | I | Oscillator In: External clock input or crystal connection. |
| OSC | 39 | O | Oscillator Out: External crystal drive signal. |
| COUTb | 37 | O | Clock Out: Inverted, buffered clock signal. |
| GND | 20 | | Ground: Power supply return pin. |
| VCC | 40 | | Power: +5 volt power supply pin. |

**0 268 490**

**Claims**

1. A system [Fig. 2B, Fig. 3A] for energizing a robot arm joint motor and for sensing motor current for feedback control, said system comprising:

a power amplifier [Fig. 3A, 150] including a circuit [Fig. 5; Fig. 11B] with a plurality of legs each having one end thereof connected to supply drive current ($I_5$) to the motor (54) from a power supply ($+V$, $-V$) connected across said circuit to the other ends of said legs;

a semiconductor switch (51-A1, 51-A2, 51-B1, 51-B2) having a control terminal (56-A1, 56-A2, 56-B1, 56-B2) connected in each leg of said circuit to make that leg conductive when a control signal (A1, A2, B1, B2) is applied to said switch control terminal; and characterized by:

current sensing means (54 or 63) serially connected between said circuit and the power supply for generating a signal (60, 61) representative of the arm joint motor current;

digital control means [Fig. 5B] for cyclically generating switch control signals that are pulse width modulated to operate said power switches and produce motor drive current having direction and magnitude required by cyclically generated robot drive control commands;

said digital control means generating said switch control signals to make each motor supply path through said circuit conductive over at least a short portion of each control cycle (see Fig. 4);

means [Fig. 5B, 844, 852] for cyclically sampling the current signal of said current sensing means at a predetermined time during conduction in each motor supply path in synchronism with the control means cycle and within said short cycle portion; and

said sampling means coupling signals representing the current signal samples to said digital control means to provide feedback control over the generation of said robot drive control commands [Figs. 6-10].

2. A system as set forth in claim 1 wherein:

the motor is a brush type DC motor;

said power amplifier circuit [fig. 5] is an H type bridge having four legs with a cross path (55) in which the motor (54) is disposed;

one of said switches is disposed in each bridge leg with an upper leg and the opposite lower leg forming a forward path to drive the motor in the forward direction and with the other opposite upper and lower legs forming a reverse path to drive the motor in the reverse direction;

one of said switches in each motor path has a control signal applied thereto to control the drive current conduction time; and

the other of said switches in each motor path has a control signal applied thereto to make it nonconductive when the one drive current controlling switch on its side of the H bridge is conductive and during underlap time and to make it conductive for the rest of the time in each cycle so as to provide paths for freewheeling motor currents.

3. A system as set forth in claim 1 wherein:

the motor is a brushless type DC motor [Fig.11A] having at least one winding;

said power amplifier [Fig. 11B] has a first set of switches for energizing said motor winding in the forward direction and a second set of switches for energizing said motor winding in the reverse direction; and

said digital control means includes:

a digital pulse width modulator circuit [Fig. 5B] having up/down counter means (844) for generating a count as a function of time;

means (845C) for comparing the counter means count to a signal representing a control command so as to define the time width of at least a first output control pulse for operating said first set of switches and the time width of at least a second output control pulse for operating said second set of switches according to the control command magnitude and a command polarity; and

means (847) for generating respective signals (A1, A2, B1, B2) for operating said first and second sets of switches to force current to be conducted through said motor winding in each direction for a short period of time in each cycle of said counter.

4. A system as set forth in claim 3 wherein:

said counter means generates a count corresponding to a sawtooth waveform [Fig. 4, 845]; and

said forced current signals are end stop signals (851-2) generated over equal time spans at and centered on the upper and lower endpoints (848-1,-2) of the count waveform in each counter cycle [Fig. 6].

5. A system as set forth in claim 4 wherein:

means [Fig. 5B, 852] are provided for generating a strobe signal at least once each counter cycle at one of the waveform endpoints.

6. A system as set forth in claim 3 wherein:

watchdog timer means [Fig. 5B, WD TIMER] are included to count the number of consecutive counter cycles over which no command update is received and to signal a shutdown if the number of such cycles reaches a predetermined value.

7. A system as set forth in claim 1 wherein:

the motor is a brushless type DC motor [Fig. 11A] comprising three interconnected phase windings;

the power amplifier [Fig. 11B] includes first through sixth switches interconnected with said windings to direct drive current through series paired windings corresponding to the switching operation of pairs of said switches; and

said digital control means includes:

a digital pulse width modulator circuit [Fig. 5B] having up/down counter means (844) for generating a sawtooth waveform as a function of time;

means (845C) for comparing the counter means count to a signal representing a control command so as to define the time width of forward and reverse reference control pulses for said power amplifier switches in accordance with the control command and command polarity;

means (852) for generating an enabling reference control pulse for each of said reference control pulses;

means (847) for generating respective control pulses which operate the six power amplifier switches and correspond in time width to said reference control pulses; and

commutating means [Fig. 13A, C; 861] responsive to said position signals and the polarity command to apply successive pairs of said switch control pulses to said switches so as to produce motor drive current for the command time as the motor current path is commutated from winding pair to winding pair in accordance with the command polarity and a predetermined sequence.

8. A system as set forth in claim 7 wherein:

a first reference control pulse [Fig. 6, A] represents one command polarity and is based on a count comparison referenced to the upper endpoint of the sawtooth waveform; and

a second reference control pulse [Fig. 6, B] represents the other command polarity and is based on a count comparison referenced to the lower endpoint of the sawtooth waveform.

9. A system as set forth in claim 7 wherein said commutating and control pulse generating means [Fig. 13] are embodied in a programmable array logic (PAL) device programmed in accordance with the following equations:

$$U1 = A1 \cdot HA \cdot \overline{\overline{HB}} + B1 \cdot \overline{\overline{HB}} \cdot HB$$
$$U2 = A2 \cdot HA \cdot \overline{\overline{HB}} + B2 \cdot \overline{\overline{HB}} \cdot HB$$
$$V1 = A1 \cdot HB \cdot \overline{\overline{HC}} + B1 \cdot \overline{\overline{HB}} \cdot HC$$
$$V2 = A2 \cdot HB \cdot \overline{\overline{HC}} + B2 \cdot \overline{\overline{HB}} \cdot HC$$
$$W1 = A1 \cdot HC \cdot \overline{\overline{HA}} + B1 \cdot \overline{\overline{HC}} \cdot HA$$
$$W2 = A2 \cdot HC \cdot \overline{\overline{HA}} + B2 \cdot \overline{\overline{HC}} \cdot HA$$

wherein U1 through W2 are the switching means control pulses, A1 through B2 are the reference control pulses, and HA, HB and HC are the position signals.

10. A system as set forth in claim 7 including:

feedback control loop means [Fig. 2B] for each arm joint and including at least position (122), velocity (124) and current (164) control loops looping through and operating the associated pulse width modulator circuit.

11. A system as set forth in claim 1 wherein:

said digital control means includes velocity [Fig. 1B, 120] and position (122) control loop means generating a motor drive current command;

said digital control means further includes torque control loop means (164) responding to said motor drive current command and said motor current signal samples (170) as feedback signals to generate voltage commands;

pulse width modulator means (within 172, see also Fig. 3B) for generating, said power switch control signals from said voltage commands;

said current feedback signals being coupled (168) to said torque control loop.

12. A system as set forth in claim 2, 3 or 7 wherein said power amplifier circuit is enclosed in a power block [Fig. 5, 53 and Fig. 11B, 60] which is provided with external power terminals for connection to the power supply and external terminals for coupling of the switch control signals to said power switch control terminals; and wherein said current sensing means (59 or 63) is connected between one of said power terminals and one each of the power supply.

13. A system as set forth in claim 12 wherein the current sensing means includes a resistance means.

14. A system as set forth in claim 13 wherein the voltage drop across said resistance means is coupled (60, 61) to said digital control means to represent the current signal for sampling.

15. A robot [Fig. 1] having:

an arm with a plurality of joints (21-26);

each of said joints having an electric drive motor [Fig. 2] associated therewith;

each of said motors coupled to a power amplifier [Fig. 3A, 150] including a circuit [Figs. 5, 11B] with a plurality of legs each having one end thereof connected to supply drive current ($I_5$) to the motor (54) from a power supply (+V, -V) connected across said circuit to the other ends of said legs;

a semiconductor switch (51-A1, 51-A2, 51-B1, 51-B2) having a control terminal (56-A1, 56-A2, 56-B1, 56-B2) connected in each said leg to make that leg conductive when a control signal (A1, A2, B1, B2) is applied to said switch control terminal; and characterized by:

current sensing means (59 or 63) serially connected between said circuit and the power supply;

digital control means [Fig. 5B] for cyclically generating switch control signals that are pulse width modulated to operate said power switches and produce motor drive current having direction and magnitude required by cyclically generated robot drive control commands;

means (844, 852) for cyclically sampling the current through said current sensing means at a predetermined time during conduction in each motor supply path in synchronism with the control means cycle and within said short cycle portion;

said digital control means generating said switch control signals [Figs. 4 and 6] to make each motor supply path through said circuit conductive over at least a short portion of each control cycle to enable the direction of the sample current through the motor to be detected;

said sampling means coupling (60, 61) signals representing the current samples to said digital control means to provide feedback control over the generation of said robot drive control commands;

one of said power amplifiers with its current sensing means and current sample coupling means being provided for each joint motor; and

said digital control means generating switch control signals (A1, A2, B1, B2) for switches in each of said power amplifiers.

16. A robot as set forth in claim 15 wherein each motor is a brushless type DC motor [Fig. 11A] with three interconnected phase windings; wherein each power amplifier [Fig. 11B] includes first through sixth switches (61-1 through 61-6) interconnected with said windings to direct drive current through series paired windings corresponding to the switching operation of pairs of said switches; and wherein the digital control means includes:

a digital pulse width modulator circuit [Fig. 5B] having up/down counter means (844) for generating a sawtooth waveform as a function of time;

means (841) for comparing the counter means count to a signal representing a control command so as to define the time width of forward and reverse reference control pulses for said power amplifier switches in accordance with the control command and command polarity;

means (852) for generating an enabling reference control pulse for each of said reference control pulses;

means [Fig. 14-1, 864-866] for generating a plurality of phase displaced signals representative of motor rotor position;

means [Fig. 13] for generating respective control pulses which operate the six power amplifier switches and correspond in time width to said reference control pulses;

commutating means (861) responsive to said position signals and the polarity command to apply successive pairs of said switch control pulses to said switches so as to produce motor drive current for the command time as the motor current path is commutated from winding pair to winding pair in accordance with the command polarity and a predetermined sequence; and

feedback control loop means [Fig. 2] for each arm joint and including at least position (124), velocity (120) and current (164) control looping through and operating the associated pulse width modulator circuit.

17. A robot as set forth in claim 15 wherein the digital control means includes:

digital pulse width modulator circuit means [Fig. 5B] for operating each power amplifier;

each pulse width modulator circuit means including up/down counter means (844) for generating a sawtooth waveform as a function of time;

means (841) for comparing the counter means count to a signal representing a control command so as to define the time span needed to operate a power amplifier and energize an associated joint drive motor in accordance with the control command;

means [Fig. 4, 851-2] for generating a first output control pulse for power amplifier switching when one drive polarity is commanded, said first output control pulse having a width corresponding to the defined time span and based on a count comparison referenced to the upper endpoint of the sawtooth waveform;

means [Fig. 4, 851-1] for generating a second output control pulse for power amplifier switching when the other polarity is commanded, said second output control pulse having a width corresponding to the defined time span and based on a count comparison referenced to the lower endpoint of the sawtooth waveform; and

control loop means [Fig. 2] for each arm joint and including at least digital position (122), velocity (120) and current (164) control loops looping through and operating the associated pulse width modulator circuit.

18. A robot as set forth in claim 17 wherein:

means (Fig. 5B, 844) are provided for generating an end stop output control pulse (Fig. 4, 851-2) for a short period of time centered on the upper waveform endpoint and another end stop output control pulse (Fig. 4, 851-1) for an equal short period of time centered on the lower waveform endpoint.

19. A robot as set forth in claim 17 wherein:

means [Fig. 6] are provided for generating a third output control pulse corresponding to said one command polarity and generally being on when said second output control pulse is off so as to provide for circulation of regenerative motor currents through the power amplifier; and

means [Fig. 6] are provided for generating a fourth output control pulse corresponding to said other command polarity and generally being on when said first output control pulse is off so as to provide for circulation of regenerative motor currents through the power amplifier (see Figs. 7-10).

20. A robot as set forth in claim 19 wherein:

underlap control means [Fig. 5B, 847] are provided to maintain a minimum off time between said first and fourth output control pulses and between said second and third output control pulses so as to allow for switching time of switching devices controlled by such output control pulses.

21. A digital control [Fig. 2] for a robot [Fig. 1] having a plurality of arm joints (21-26), said control comprising:

an electric motor [Fig. 5, 54] for driving each of the robot arm joints;

a power amplifier [Fig. 5, Fig. 11B] for each of said motors having power switching devices operable to supply current to the motor for forward or reverse operation; and characterized by:

a digital pulse width modulator circuit [Fig. 5B] for operating the power amplifier switching devices for each arm joint;

said modulator circuit including up/down counter (844) means for generating a sawtooth waveform as a function of time;

means (841) for comparing the counter means count to a signal representing a control command so as to define the time span needed to operate a power amplifier and energize an associated joint drive motor in accordance with the control command;

means (847) for generating a first output control pulse for power amplifier switching when one drive polarity is commanded, said first output control pulse having a width corresponding to the defined time span and based on a count comparison referenced to the upper endpoint of the sawtooth waveform; and

means (847) for generating a second output control pulse for power amplifier switching when the other polarity is commanded, said second output control pulse having a width corresponding to the defined time span and based on a count comparison referenced to the lower endpoint of the sawtooth waveform; and

feedback control loop means [Fig. 2] for each arm joint and including at least digital position (122), velocity (120) and current (164) control loops looping through and operating the associated pulse width modulator circuit.

22. A digital robot control as set forth in claim 21 wherein:

each motor [Fig. 5] is a brush type DC motor;

each power amplifier (50) is an H bridge amplifier circuit having a power switching device in each bridge leg and having the associated DC motor connected in the cross path;

said first and second output control pulses are coupled to first and second switching devices in legs on first and second sides of the bridge; and

said digital pulse width modulator circuit further includes means (847) for generating third and fourth output control pulses corresponding respectively to said one and said other command polarities and generally being on respectively when said second output or said first control pulse is off so as to provide for circulation of regenerative motor currents through the power amplifier; and

said third pulse is coupled to a switching device in the other bridge leg on the first bridge side and said fourth pulse is coupled to a switching device in the other bridge leg on the second bridge side.

23. A digital robot control as set forth in claim 21 wherein:

each motor [Fig. 11A] is a brushless type DC motor having three interconnected phase windings; and

each power amplifier [Fig. 11B] includes six power switching devices interconnected between a power supply and the associated motor windings to energize said motor windings under control of said pulse width modulator circuit.

24. A digital robot control as set forth in claim 21 wherein:

means [Fig. 5B, 847] are provided for generating an end stop output control pulse [Fig. 4, 851-1] for a short period of time centered on the upper waveform endpoint and another end stop output control pulse [Fig. 4, 851-2] for an equal short period of time centered on the lower waveform endpoint.

25. A digital control as set forth in claim 22 wherein:

underlap control means (847) are provided to maintain a minimum off time between said first and fourth output control pulses and between said second and third output control pulses so as to allow for switching time of switching devices controlled by such output control pulses.

26. A digital pulse width modulator circuit [Fig. 5B] for operating power amplifiers and joint motors in a robot control and characterized by comprising:

up/down counter means (844) for generating a sawtooth waveform [Fig. 4] as a function of time;

means (841) for comparing the counter means count to a signal representing a control command so as to define the time span needed to operate a power amplifier and energize an associated joint drive motor in accordance with the control command;

means (847) for generating a first output control pulse [Fig. 4, 851-2] for power amplifier switching when one drive polarity is commanded, said first output control pulse having a width corresponding to the defined time span and based on a count comparison referenced to the upper endpoint of the sawtooth waveform; and

means (847) for generating a second output control pulse [Fig. 4, 851-1] for power amplifier switching when the other polarity is commanded, said second output control pulse having a width corresponding to the defined time span and based on a count comparison referenced to the lower endpoint of the sawtooth waveform.

27. A digital pulse width modulator circuit as set forth in claim 26 wherein:

means (844) are provided for generating an end stop output control pulse (851-2) for a short period of time centered on the upper waveform endpoint and another end stop output control pulse (851-1) for an equal short period of time centered on the lower waveform endpoint.

28. A digital pulse width modulator circuit as set forth in claim 27 wherein:

means (847) are provided for generating a third output control pulse corresponding to said one command polarity and generally being on when said second output control pulse is off so as to provide for circulation of regenerative motor currents through the power amplifier; and

means (847) are provided for generating a fourth output control pulse corresponding to said other command polarity and generally being on when said first output control pulse is off so as to provide for circulation of regenerative motor currents through the power amplifier.

29. A digital pulse width modulator circuit as set forth in claim 28 wherein:

underlap control means (847) are provided to maintain a minimum off time between said first and fourth output control pulses and between said second and third output control pulses so as to allow for switching time of switching devices controlled by such output control pulses.

30. A digital pulse width modulator circuit as set forth in claim 26 wherein:

watchdog timer means [WD TIMER] are included to count the number of consecutive counter cycles over which no command update is received and to signal a shutdown if the number of such cycles reaches a predetermined value.

31. A digital pulse width modulator circuit as set forth in claim 26, 27, 29 or 30 wherein a large scale integrated (LSI) gate array chip (828, 829) is employed to embody the circuit.

32. A digital pulse width generator as set forth in claim 26 wherein three sets of said comparing means and said generating means are provided within an LSI chip (828, 829) to provide three channels for controlling three respective motors associated with three respective axes of said robot.

0268490

FIG. 1

20

FIG. 2A

FIG.2B

0268490

FIG. 3A

0268490

FIG. 3B

FIG. 4

FIG. 5

FIG. 6

0268490

FIG. 5B

FIG. 6A

801

FIG.6B

0268490

PWM DEVICE REGISTER MAP

| A2 | A1 | A0 | REGISTER | FUNCTION |
|----|----|----|----------|----------|
| 0 | 0 | 0 | R0 | RAMP COUNTER (READ ONLY) |
| 0 | 0 | I | RI | COMMAND\STATUS |
| 0 | I | 0 | R2 | AXIS I LEAST SIGNIFICANT BIT |
| 0 | I | I | R3 | AXIS I MOST SIGNIFICANT 8-BITS |
| I | 0 | 0 | R4 | AXIS 2 LEAST SIGNIFICANT BIT |
| I | 0 | I | R5 | AXIS 2 MOST SIGNIFICANT 8-BITS |
| I | I | 0 | R6 | AXIS 3 LEAST SIGNIFICANT BIT |
| I | I | I | R7 | AXIS 3 MOST SIGNIFICANT 8-BITS |

REGISTER RI BIT FUNCTIONS

| D7 | D6 | D5 | D4 | D3 | D2 | DI | D0 | WRITE BIT ASSIGNMENTS |
|----|----|----|----|----|----|----|----|-----------------------|

- VOLTAGE LIMIT BIT 4
- VOLTAGE LIMIT BIT 5
- VOLTAGE LIMIT BIT 6
- VOLTAGE LIMIT BIT 7
- NOT USED
- CLOCK SOURCE SELECTION "I"=EXT
- INTERNAL CLOCK
- ENABLE PWM "I" = ENABLE

REGISTER RI BIT FUNCTIONS

| D7 | D6 | D5 | D4 | D3 | D2 | DI | D0 | READ BIT ASSIGNMENTS |
|----|----|----|----|----|----|----|----|----------------------|

- VOLTAGE LIMIT BIT 4
- VOLTAGE LIMIT BIT 5
- VOLTAGE LIMIT BIT 6
- VOLTAGE LIMIT BIT 7
- LOGICAL 0
- INTERRUPT OVERRUN STATUS
- INTERRUPT REQUEST STATUS
- PWM ENABLE STATUS

FIG.6C

0268490

FIG. 7

FIG. 8

0268490

FIG. 9

0268490

FIG. 10

0268490

FIG. IIA

FIG. IIB

FIG.IIC

FIG.IID

0268490

FIG. 12 A

875

SAMP1/

876-1

SAMP2/

876-2

FIG. 12 B

# FIG. 12C

878 — AD7501
8 CHANNEL ANALOG MULTIPLEXER

+15V
-15V
AGND

879 — 74ALS874
CHANNEL CONTROL LATCH

XD0
XD1
XD2
XD3
MUXSET/
RESET/
+5V

876 — PAL16R8
SAMPLE TIMER GENERATOR PAL

IFBSCK
IFBS1/
RLES1
IFBS2/
RLES2
RESET/
PWMOP
+5V
+5V

PALEN/

P2 DATA BUS

877 — AD573
A/D CONVERTER

CONVAD
ADDATA/
ADSTAT/
+5V
-15V

XD6
XD7
XD8
XD9
XD10
XD11
XD12
XD13
XD14

FIG.13A

0268490

0268490

FIG.13B

0268490

FIG. 13C

0268490

FIG. 13D

0268490

FIG.13E

FIG.13F

FIG.14-1

FIG.14-2

FIG. 14-3

FIG. 14-4

0268490

FIG.15